(19) Europäisches Patentamt
European Patent Office
Office européen des brevets

(11) **EP 3 766 305 B1**

(12) **EUROPÄISCHE PATENTSCHRIFT**

(45) Veröffentlichungstag und Bekanntmachung des Hinweises auf die Patenterteilung:
**11.12.2024   Patentblatt 2024/50**

(21) Anmeldenummer: **19711352.5**

(22) Anmeldetag: **15.03.2019**

(51) Internationale Patentklassifikation (IPC):
**H05B 45/00** *(2022.01)*

(52) Gemeinsame Patentklassifikation (CPC):
**H05B 45/20; H05B 47/19; H05B 47/1965**

(86) Internationale Anmeldenummer:
**PCT/EP2019/056576**

(87) Internationale Veröffentlichungsnummer:
**WO 2019/175403 (19.09.2019 Gazette 2019/38)**

(54) **BELEUCHTUNGSSYSTEM ZUR DYNAMISCHEN BELEUCHTUNGSSTEUERUNG**

LIGHTING SYSTEM FOR A DYNAMIC LIGHTING CONTROL

SYSTÈME D'ÉCLAIRAGE POUR UN CONTRÔLE D'ÉCLAIRAGE DYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2018   DE 102018106089**

(43) Veröffentlichungstag der Anmeldung:
**20.01.2021   Patentblatt 2021/03**

(73) Patentinhaber: **Ledvance GmbH**
**85748 Garching bei München (DE)**

(72) Erfinder:
• **LANG, Dieter**
  **83052 Bruckmühl (DE)**
• **PERES, Enzo**
  **80796 München (DE)**
• **WEINERT, Timo**
  **84453 Mühldorf am Inn (DE)**

(74) Vertreter: **Lanchava, Bakuri**
**Patentanwaltskanzlei Dr. Lanchava**
**Messerschmittstraße 4**
**80992 München (DE)**

(56) Entgegenhaltungen:
WO-A1-2015/040036    WO-A1-2016/058849
WO-A2-2016/199101    US-B1- 9 655 215
US-B1- 9 795 000

**Beschreibung**

Technisches Gebiet

Die vorliegende Erfindung betrifft ein Beleuchtungssystem zur dynamischen Beleuchtungssteuerung.

Stand der Technik

Beleuchtungssysteme, die eine dynamische Beleuchtungssteuerung ermöglichen, kommen im Zusammenhang mit Human Centric Lighting zum Einsatz. Dabei wird insbesondere zeitgesteuert die Helligkeit und Lichtfarbe von Lampen, Leuchten oder Beleuchtungssystemen gesteuert.

Im Allgemeinen wird eine am natürlichen Tageslichtverlauf orientierte Lichtdynamik realisiert, die sich durch helles Licht mit kaltweißer (tageslichtähnlicher) Lichtfarbe am Tag und einer reduzierten Helligkeit mit warmweißer Lichtfarbe am Abend und nachts auszeichnet.

Die zeitliche Steuerung erfolgt meistens anhand fest einprogrammierter Zeiten und zugeordneter Werte für die Einstellung von Helligkeit und Lichtfarbe. Zwischen diesen fest vorgegebenen Werten wird nach einem Rechenverfahren interpoliert, um graduelle und für den Nutzer unmerkliche Übergänge zu realisieren.

Bei manchen Systemen können die fest einprogrammierten Zeiten abhängig von Jahreszeit und geografischer Lage, anhand astronomischer Berechnungen oder enthaltener Tabellen (z.B. für Sonnenaufgang und Sonnenuntergang), manuell oder automatisch angepasst werden.

Für besondere Anforderungen kann von der vorgegebenen Dynamik durch Nutzereingriffe abgewichen werden, indem spezielle Szenen ausgewählt werden, z.B. eine Szene mit reduzierter Helligkeit für das Ansehen von Video-Präsentationen in Schulen oder in Besprechungsräumen. Ein anderes Beispiel ist eine "Weihnachtsstimmung" mit geringer Helligkeit und sehr warmweißer Beleuchtung in der Absicht, eine angenehme Atmosphäre zu schaffen. Diese speziellen Szenen sind im Allgemeinen statisch. Die aus biologischer Sicht sinnvolle Dynamik wird dadurch ausgeschaltet.

Die oben beschriebenen Eingriffsmöglichkeiten der Nutzer durch Auswahl vorgegebener Szenen sind im Allgemeinen nicht ausreichend und müssen im Einzelfall konfiguriert werden, was mit erheblichem Aufwand bei der Inbetriebnahme oder einer späteren Anpassung verbunden ist.

Eine freie Eingriffsmöglichkeit des Nutzers mit der Möglichkeit, die Helligkeit und Farbtemperatur des Beleuchtungssystems zu verändern, ist im Allgemeinen nicht zielführend, da die Nutzer nicht über die erforderlichen Fachkenntnisse verfügen, aus der Vielzahl der Einstellmöglichkeiten diejenigen auszuwählen, welche der jeweiligen Situation oder den individuellen Bedürfnissen des Nutzers entsprechen.

Es kann sogar dazu kommen, dass Nutzer aus Unkenntnis Lichtsituationen einstellen, welche zwar vermeintlich ihren Wünschen entsprechen, aber aus biologischer Sicht hinsichtlich ihrer Wirkungen auf den Nutzer negativ sind. Das kann z.B. eine Lichtsituation sein, bei der nachts eine sehr helle und kaltweiße Beleuchtung eingestellt ist. Häufig werden solche Möglichkeiten gar nicht oder falsch genutzt, weil die Nutzer mit dem Bedienkonzept nicht vertraut oder überfordert sind. In den meisten Fällen ist ein tieferes Verständnis der technischen Funktion der Beleuchtungsanlage oder ein Verständnis über die visuellen und nicht-visuellen Wirkungen von Licht erforderlich, um eine dynamische Beleuchtungsanlage richtig zu nutzen, welches beim Nutzer nicht vorhanden ist.

Auch Planer und Installateure sind mit der Planung und Inbetriebnahme häufig überfordert, weil komplexe Programmieraufgaben an Lichtsteuersystemen zu übernehmen sind, während die Nutzeranforderungen im Detail häufig unklar sind. Weiterhin ergibt sich für den Nutzer oft erst bei Nutzung der Anlage der Wunsch, vorgegebene Einstellungen auch verändern zu können. Aus der US 9,655,215 B1 ist ein Beleuchtungssystem bekannt, das es einem Benutzer ermöglicht, Szenen für Gruppen von Lampen zu programmieren. Die WO 2016/058849 A1 offenbart eine Leuchte mit zeitlich variabler Farbtemperatur und mit einer Boost-Funktion zur temporären Erhöhung der Farbtemperatur. Aus der WO2016199101A2 ist ein Beleuchtungssystem bekannt, das Lichtparameter über einen zeitlichen Verlauf ändert.

Darstellung der Erfindung

Ausgehend von dem bekannten Stand der Technik ist es eine Aufgabe der vorliegenden Erfindung, ein verbessertes Beleuchtungssystem bereitzustellen.

Die Aufgabe wird durch ein Beleuchtungssystem mit den Merkmalen des unabhängigen Anspruchs 1 gelöst. Vorteilhafte Weiterbildungen ergeben sich aus den Unteransprüchen. Entsprechend wird ein Beleuchtungssystem vorgeschlagen, umfassend ein oder mehrere Leuchtmittel und eine Steuervorrichtung zum Anpassen von Lichtparametern der Leuchtmittel im Betrieb. Lichtparameter können dabei insbesondere die Intensität und/oder die Farbtemperatur des von den Leuchtmitteln im Betrieb emittierten Lichts sein. Der Begriff Intensität wird hier und im Folgenden als Sammelbegriff für lichttechnische Größen wie z.B. Helligkeit, Beleuchtungsstärke oder auch Leuchtdichte verwendet. Auch wenn im Folgenden aus Gründen der Einfachheit von mehreren Leuchtmitteln gesprochen wird, kann ein erfindungsgemäßes Beleuchtungssystem auch nur ein Leuchtmittel aufweisen. Da eine gegebene Intensität des von den Leuchtmitteln emittierten Lichts in einer gegebenen Installation zu einer eindeutigen Verteilung der Beleuchtungsstärke im Raum führt, werden im Folgenden die Begriffe Intensität, Helligkeit und Beleuchtungsstärke austauschbar gebraucht.

Ein Lichtparameter kann auch eine veränderliche Ausstrahlcharakteristik einer Lichtquelle sein, z.B. die Ausstrahlrichtung oder ein veränderlicher Ausstrahlwinkel. Dies wird im Folgenden nicht weiter vertiefend dargestellt, kann aber in Analogie zu Beleuchtungsstärke oder Farbtemperatur behandelt werden.

Die Leuchtmittel können mit der Steuervorrichtung über Kabel (z.B. DALI, DMX oder mittels anderer Protokolle) und/oder kabellos (z.B. WLAN, Bluetooth, ZigBee, Z-Wave oder mittels anderer Protokolle) verbunden sein. Auch eine gemischte Verbindung (teilweise über Kabel, teilweise kabellos) ist möglich.

Die Steuervorrichtung ist eingerichtet, die Lichtparameter zeitabhängig gemäß mehrerer vorgegebener Verläufe der Lichtparameter anzupassen. Insbesondere können die Intensität und/oder die Farbtemperatur des Lichts im Laufe eines Tages einer Veränderung unterliegen. Die Verläufe dieser Veränderungen können durch Funktionen beschrieben sein, welche die Werte der Lichtparameter z.B. abhängig von der Tageszeit definieren. Die Steuervorrichtung kann eine Echtzeituhr aufweisen, mittels derer der Steuervorrichtung die jeweils aktuelle Zeit zur Verfügung steht, oder eine Schnittstelle, über die der Steuervorrichtung die jeweils aktuelle Zeit zur Verfügung gestellt wird. Diese Funktionen können stetig oder auch punktweise nur für spezifische Zeiten definiert sein, während für andere Zeiten die Lichtparameter interpoliert werden. Insbesondere für Zeiten, in denen die Änderungen nur gering sind (z. B. nachts), kann zwischen zwei definierten Zeitpunkten ein Zeitraum von einigen Stunden liegen.

Weiterhin kann die Zeit auf einer deskriptiven Skala definiert sein. Beispielsweise kann ein Zeitpunkt für den Sonnenaufgang, einer für den Sonnenhöchststand, einer für den Sonnenuntergang und einer für Mitternacht definiert sein. Dazwischen liegende Zeitpunkte können abhängig von diesen Zeitpunkten definiert sein. Z.B. kann die Zeit zwischen Sonnenaufgang und Sonnenhöchststand in mehrere Abschnitte geteilt werden. Entsprechendes gilt für die Zeit zwischen Sonnenhöchststand und Sonnenuntergang, für den Abend, die Nacht, bis zum Sonnenaufgang am nächsten Morgen. So kann ein ganzer Tagesablauf beispielsweise durch mehrere (z.B. 20) solcher deskriptiver Zeitpunkte und den Zeitpunkten zugeordneten Lichtparameter definiert werden.

Die Zuordnung der deskriptiven Zeitpunkte zur Echtzeit (Tageszeit) kann nach einem astronomischen Programm erfolgen, welches für jeden Tag am jeweiligen Standort der Beleuchtungsanlage die Echtzeit für die o.g. deskriptiven Zeitpunkte bestimmt. Astronomische Programme, welche die Echtzeit für Sonnenauf- und -untergang bestimmen, sind bekannt. Über eine solche Zuordnung kann, obwohl nur ein Satz von Lichtparametern definiert ist, jedem Tag im Jahr ein individueller, an den realen Tageslichtverlauf angelehnter Verlauf zugeordnet werden.

Die nachfolgende Tabelle zeigt zwei Beispiele für die Zuordnung von deskriptiven Zeitpunkten zu Echtzeit (das Beispiel London berücksichtigt die andere Zeitzone und beide Beispiele die Sommerzeit).

| Deskriptiver Zeitpunkt | Reale Uhrzeit Beispiel München, 1.10.2017 | Reale Uhrzeit Beispiel London, 1.07.2017 |
|---|---|---|
| Mitternacht | 0:00 | 0:00 |
| Sonnenaufgang -2/10 LN | 4:45 | 3:17 |
| Sonnenaufgang -1/10 LN | 5:59 | 4:02 |
| Sonnenaufgang - 30 Minuten | 6:43 | 4 : 17 |
| Sonnenaufgang | 7 : 13 | 4:47 |
| Sonnenaufgang + 30 Minuten | 7:43 | 5:17 |
| Sonnenaufgang +1/10 LD | 8:23 | 6:26 |
| Sonnenaufgang +2/10 LD | 9:33 | 8:05 |
| Sonnenhöchststand -1/10 LD | 11:53 | 11:24 |
| Sonnenhöchststand | 13:03 | 13:04 |
| Sonnenhöchststand +1/10 LD | 14:13 | 14:43 |
| Sonnenhöchststand +2/10 LD | 15:23 | 16:22 |
| Sonnenuntergang - 2/10 LD | 16:33 | 18:02 |
| Sonnenuntergang - 1/10 LD | 17:43 | 19:41 |

(fortgesetzt)

| Deskriptiver Zeitpunkt | Reale Uhrzeit Beispiel München, 1.10.2017 | Reale Uhrzeit Beispiel London, 1.07.2017 |
|---|---|---|
| Sonnenuntergang | 18:53 | 21:21 |
| Sonnenuntergang + 1/10 LN | 20:07 | 22:21 |
| Sonnenuntergang + 2/10 LN | 21:21 | 22:50 |
| Mitternacht - 1/10 LN | 22:46 | 23:15 |
| Mitternacht | 0:00 | 0:00 |

Dabei ist

LD = Länge des Tages = Zeitdauer zwischen Sonnenaufgang und Sonnenuntergang
LN = Länge der Nacht = Zeitdauer zwischen Sonnenuntergang und Sonnenaufgang am nächsten Tag

Beispielsweise kann die Steuervorrichtung die Leuchtmittel so ansteuern, dass diese am Morgen und am Abend Licht von geringer Intensität und/oder mit niedriger Farbtemperatur (z.B. warm-weiß) und tagsüber Licht von hoher Intensität und/oder mit hoher Farbtemperatur (z.B. kalt-weiß, tageslichtähnlich) emittiert. Ebenfalls beispielsweise kann ein Leuchtmittel am Tag über seine Ausrichtung und/oder seinen Ausstrahlwinkel größere Flächen beleuchten, darunter beispielsweise Wände, Raumdecken, oder auch die Gesichtspartie von Personen im Raum, während am Abend nur gezielt einzelne Objekte, wie z.B. Arbeitsflächen, beleuchtet werden.

Die Leuchtmittel können dabei einzeln oder in Gruppen zusammengefasst angesteuert werden, so dass für verschiedene Leuchtmittel und verschiedene Gruppen von Leuchtmitteln auch verschiedene Verläufe vorgegeben sein können.

Die nachfolgende Beschreibung gilt entsprechend beispielhaft für einen einzelnen vorgegebenen Verlauf für ein Leuchtmittel oder eine Gruppe von Leuchtmitteln, neben dem auch andere Verläufe für andere Leuchtmittel möglich sind. Die Steuervorrichtung kann somit ermöglichen einen oder auch mehrere Verläufe vorzugeben; z.B. für Leuchten an Decken andere Verläufe zu definieren als für Leuchten, die Wände anstrahlen.

Die Steuervorrichtung ist eingerichtet, eine eindimensionale Benutzereingabe entgegenzunehmen und von einem aktuellen Verlauf aus den mehreren Verläufen entsprechend der eindimensionalen Benutzereingabe zu einem anderen Verlauf der mehreren vorgegebenen Verläufe zu wechseln. Die Steuervorrichtung ist ferner eingerichtet, den aktuellen Verlauf der Lichtparameter entsprechend weiterer Eingabewerte zu verändern, wobei die Steuervorrichtung ferner eingerichtet ist, die weiteren Eingabewerte zu ermitteln und/oder von externen Sensoren entgegenzunehmen, wobei die weiteren Eingabewerte zunächst zusammen mit einer von einem Benutzer über ein Eingabemittel eingegebenen Stellgröße in eine einzelne Größe verrechnet werden, welche dann als eindimensionaler Benutzereingabe für das Beleuchtungssystem dient. Unter einer eindimensionalen Benutzereingabe wird dabei eine einzelne Größe verstanden, deren Wert zwischen einem unteren Grenzwert und einem oberen Grenzwert liegt. Beispielsweise kann der Wert der eindimensionalen Benutzereingabe zwischen 0 und 1, alternativ zwischen 0 und 100, weiter alternativ zwischen -100 und +100 liegen. Vorzugsweise entspricht ein Wert im Wertebereich der eindimensionalen Benutzereingabe (z.B. eine Einstellung von 0) der Situation, dass der vorgegebene Verlauf der Lichtparameter unverändert bleibt. Für alle anderen Einstellungen bestimmt der Wert der Benutzereingabe, wie weit der geänderte Verlauf vom vorgegebenen Verlauf abweicht. Der Benutzer muss also nicht einzelne Lichtparameter verändern, sondern bestimmt mit der Veränderung einer Einstellgröße die daraus funktional abgeleiteten Veränderungen der Lichtparameter. Insbesondere ist die eindimensionale Benutzereingabe gerade nicht die Einstellung eines Lichtparameters wie Helligkeit oder Farbtemperatur. Auch mehrere verschiedene Verläufe für verschiedene Leuchtmittel können von der gleichen Benutzereingabe verändert werden.

Erfindungsgemäß verändert die Steuervorrichtung auf eine Eingabe einer eindimensionalen Benutzereingabe nicht unmittelbar die aktuellen Werte der Lichtparameter, also nicht die aktuelle Helligkeit und die aktuelle Farbtemperatur, sondern sie verändert entsprechend voreingestellter Vorgaben den Verlauf der Lichtparameter vom vorgegebenen Verlauf zu einem geänderten Verlauf und wirkt sich damit auch auf deren Verlauf in der Zukunft aus. Dies kann dann auch dazu führen, dass die aktuellen Werte der Lichtparameter entsprechend angepasst werden, wenn der geänderte Verlauf für den aktuellen Zeitpunkt andere Werte für die Lichtparameter vorsieht als der ursprünglich vorgegebene Verlauf.

Eine Veränderung der eindimensionalen Benutzereingabe führt also nicht zum Starten einer Szene, sondern berücksichtigt insbesondere die aktuelle Tageszeit, führt also die geänderten Lichtparameter passend zur aktuellen Tageszeit fort. Ein versehentliches Starten einer für die aktuelle Tageszeit unpassenden Szene (z.B. ein Sonnenuntergang zur Mittagszeit) kann somit bei entsprechender Programmierung der Steuereinrichtung verhindert werden.

Beispielsweise kann eine Erhöhung der eindimensionalen Benutzereingabe zu einer Erhöhung sowohl der Intensität als auch der Farbtemperatur führen. Das Licht wird also heller und "kälter". Entsprechend kann eine Erniedrigung der eindimensionalen Benutzereingabe zu einer Erniedrigung sowohl der Intensität als auch der Farbtemperatur führen. Das Licht wird also dunkler und "wärmer". Durch eine solche Einstellung der Lichtparameter in Abhängigkeit von einem einzigen Wert kann für einen Benutzer die Bedienung des Beleuchtungssystems vereinfacht werden. Auch kann verhindert werden, dass der Benutzer unpassende Kombinationen von Werten für die Lichtparameter auswählt. Insbesondere wenn durch die Veränderung der eindimensionalen Benutzereingabe mehrere Lichtparameter gleichzeitig beeinflusst werden, können die Veränderungen der Lichtparameter optimal aufeinander abgestimmt sein.

Dies kann zur Folge haben, dass dieselbe Veränderung der eindimensionalen Benutzereingabe je nach Tageszeit eine andere Wirkung auf die Lichtparameter hat, insbesondere der Betrag der Veränderung der Lichtparameter unterschiedlich groß ist. Beispielsweise kann eine Veränderung der eindimensionalen Benutzereingabe am Morgen und/oder am Abend eine geringere Auswirkung auf die Änderung der Helligkeit und/oder Farbtemperatur haben als dieselbe Veränderung der eindimensionalen Benutzereingabe um die Mittagszeit oder am Nachmittag.

Die Veränderung der Lichtparameter kann sich aus einer Veränderung der eindimensionalen Benutzereingabe beispielsweise mittels einer entsprechenden Vorgabe (z.B. mittels einer analytischen oder numerischen Funktion, die auch abschnittsweise definiert sein kann, oder mittels einer vorberechneten Wertetabelle, ggf. auch durch Interpolation) ergeben.

Vorzugsweise weist das Beleuchtungssystem ein mit der Steuervorrichtung verbundenes Eingabemittel zur Eingabe der eindimensionalen Benutzereingabe auf. Das Eingabemittel kann ein unmittelbares Eingabemittel sein, beispielsweise ein Schalter, Taster, Dreh- oder Schieberegler. Das unmittelbare Eingabemittel kann ein mechanisches Eingabemittel sein. Das unmittelbare Eingabemittel kann auch eine Anzeigeeinrichtung aufweisen, auf der ein oder mehrere einem mechanischen Eingabemittel entsprechende Eingabeelemente angezeigt werden. Vorzugsweise ist eine solche Anzeigeeinrichtung berührungsempfindlich. Auf einer berührungsempfindlichen Anzeigeeinrichtung können aber auch ein oder mehrere Eingabeelemente angezeigt werden, die keine Entsprechung in einem mechanischen Eingabemittel finden. Auch eine gemischte Anzeige ist möglich. Das Eingabemittel kann mit der Steuervorrichtung über Kabel und/oder kabellos (z.B. WLAN, Bluetooth, ZigBee, Z-Wave oder mittels anderer Protokolle) verbunden sein.

Das Eingabemittel kann auch eingerichtet sein, auf der Anzeigeeinrichtung ein Maß für die Veränderung des Verlaufs der Lichtparameter anzuzeigen. Dies kann beispielsweise durch eine grafische Darstellung des Wertes der eindimensionalen Benutzereingabe erfolgen. Es kann auch eine grafische Darstellung der Auswirkung der gewählten eindimensionalen Benutzereingabe auf die Lichtparameter erfolgen. Es kann ferner auch eine Darstellung bestimmter Schwellen des Wertes der eindimensionalen Benutzereingabe (beispielsweise in Form von Worten) erfolgen.

Das Eingabemittel kann auch eine auf einem Computer (insbesondere Desktopcomputer, Laptopcomputer, Smartphone, Tablet oder auf anderen mobilen Geräten) laufende Anwendung sein. Die Anwendung kann auf einer Anzeigevorrichtung des Computers ein oder mehrere Eingabeelemente darstellen wie oben beschrieben.

Erfindungsgemäß ist die Steuervorrichtung ferner eingerichtet, den vorgegebenen Verlauf der Lichtparameter entsprechend weiterer Eingabewerte zu verändern. Weitere Eingabewerte sind hier Eingabewerte, die nicht von einem Benutzer eingegeben werden. Die weiteren Eingabewerte können beispielsweise von der Steuervorrichtung selbst ermittelt werden (beispielsweise mittels interner Sensoren oder durch Berechnung aus bereits bekannten Größen). Die Steuervorrichtung kann die weiteren Eingabewerte auch von anderen Komponenten, insbesondere von externen Sensoren entgegennehmen.

Beispiele für weitere Eingabewerte sind das Datum, die Uhrzeit, die Anwesenheit von Personen im Bereich, der von den Leuchtmitteln beleuchtet wird. Beispielsweise kann die Intensität der Beleuchtung verringert werden, wenn keine Personen anwesend sind.

Die weiteren Eingabewerte werden zunächst zusammen mit einer von einem Benutzer über ein Eingabemittel eingegebenen Stellgröße in eine einzelne Größe verrechnet, welche dann als eindimensionale Benutzereingabe für das Beleuchtungssystem dient. So kann z.B. in einem einfachen Fall die Nutzereingabe über einen Drehgeber, die eine bestimmte Einstellung hinsichtlich Lichtfarbe und Helligkeit bestimmt, bei Anwesenheit von Personen unverändert bleiben, während sie bei Abwesenheit auf einen definierten Wert (z.B. "-2") gesetzt wird. Dieser Wert würde dann einem "dynamischen" Verlauf entsprechen, der zu jeder Zeit eine Helligkeit gleich Null hat. Mit der resultierenden eindimensionalen Eingabegröße kann die Beleuchtung ausgeschaltet werden, wenn niemand anwesend ist. Dies entspricht der später dargestellten "Dimmfunktion".

Auch bei der Berücksichtigung weiterer Eingabewerte werden nicht unmittelbar die aktuellen Werte der Lichtparameter, also nicht die aktuelle Helligkeit und die aktuelle Farbtemperatur, verändert, sondern entsprechend voreingestellter Vorgaben der Verlauf der Lichtparameter vom vorgegebenen Verlauf zu einem geänderten Verlauf. Dies kann dann auch dazu führen, dass die aktuellen Werte der Lichtparameter entsprechend angepasst werden, wenn der geänderte Verlauf für den aktuellen Zeitpunkt andere Werte für die Lichtparameter vorsieht als der ursprünglich vorgegebene Verlauf. So kann zum Beispiel ein Lichtsensor die Helligkeit im Raum messen, die auch von natürlichem Tageslicht beeinflusst ist, und diese Größe kann mit der direkten Nutzereingabe zu einer neuen eindimensionalen Eingabegröße so verrechnet werden, dass in der Folge ein anderer dynamischer Verlauf realisiert wird, der hinsichtlich seiner Helligkeit niedriger liegt als der, der sich ohne Tageslichteinfluss nur auf Basis der direkten Nutzereinstellung ergeben würde.

In einer Ausführungsform ist die Steuervorrichtung ferner eingerichtet, den vorgegeben Verlauf der Lichtparameter nichtlinear mit der eindimensionalen Benutzereingabe zu verändern. Beispielsweise kann bei einer Änderung der eindimensionalen Benutzereingabe zu höheren Einstellwerten hin zunächst die Intensität relativ stärker verändert werden als die Farbtemperatur, während bei Änderungen zu niedrigeren Einstellwerten hin die Farbtemperatur relativ stärker verändert wird als die Intensität.

In einer Ausführungsform ist die Steuervorrichtung ferner eingerichtet, bei der Veränderung des Verlaufs der Lichtparameter Maximal- und/oder Minimalwerte für die Lichtparameter zu berücksichtigen. Anders ausgedrückt kann es einen vorgegebenen Verlauf von Maximal- und/oder Minimalwerten für die Lichtparameter geben und die Steuervorrichtung kann sicherstellen, dass der geänderte Verlauf der Lichtparameter nicht oberhalb des vorgegebenen Verlaufs von Maximalwerten und/oder nicht unterhalb des vorgegebenen Verlaufs von Minimalwerten liegt.

Insbesondere können die Maximal- und/oder Minimalwerte von zeitlichen Parametern und/oder von anderen als zeitlichen Parametern abhängen. Als Beispiel für zeitliche Parameter kann der Maximalwert der Intensität und/oder der Farbtemperatur in den Morgen- und/oder Abendstunden geringer sein als tagsüber. Dies kann Einstellungen des Benutzers verhindern, die beispielsweise dem circadianen Rhythmus zuwiderlaufen.

In einer Ausführungsform ist die Steuervorrichtung so eingerichtet, dass die Verläufe für verschiedene vorgegebene Zeitpunkte und vorgegebene Nutzereinstellungen durch feste Wertepunkte beschrieben werden. Zeitlich oder hinsichtlich Nutzereinstellung dazwischen liegende Punkte können zwischen den definierten Wertepunkten interpoliert werden.

In einer Ausführungsform ist die Steuervorrichtung ferner eingerichtet, den veränderten Verlauf der Lichtparameter nach einer vorgegebenen ersten Zeitspanne auf den vorgegebenen Verlauf der Lichtparameter zurückzusetzen. Somit kann sichergestellt werden, dass vom Benutzer vorgenommene Änderungen des Verlaufs der Lichtparameter automatisch nach der ersten Zeitspanne wieder rückgängig gemacht werden. Die erste Zeitspanne kann eine konstante Dauer haben. Die erste Zeitspanne kann auch je nach vorgenommener Veränderung unterschiedliche Dauern haben. Beispielsweise können geringe Änderungen des Verlaufs der Lichtparameter für eine längere Zeitdauer aufrechterhalten werden als große Änderungen.

Das Zurücksetzen des veränderten Verlaufs der Lichtparameter auf den vorgegebenen Verlauf der Lichtparameter nach dem Ablauf der vorgegebenen ersten Zeitspanne kann sprunghaft oder kontinuierlich über eine vorgegebene zweite Zeitspanne erfolgen.

In einer Ausführungsform ist die Steuervorrichtung ferner eingerichtet, den veränderten Verlauf der Lichtparameter auch nach dem Aus- und Wiedereinschalten des/der Leuchtmittel beizubehalten, wenn zwischen dem Aus- und Wiedereinschalten höchstens eine vorbestimmte dritte Zeitspanne liegt. Somit können bei einem kurzen Verlassen des von den Leuchtmitteln beleuchteten Bereichs die Leuchtmittel ausgeschaltet werden, ohne die vorgenommene Veränderung beim Wiedereinschalten zu verlieren. Andererseits kann die dritte Zeitspanne so gewählt werden, dass nach einem Ausschalten und einem Wiedereinschalten nach einer halben Stunde oder am nächsten Tag der Verlauf der Lichtparameter wieder auf den vorgegebenen Verlauf zurückgesetzt ist, sodass der Benutzer sich keine Gedanken darüber machen muss, ob eventuell noch ein veränderter Verlauf der Lichtparameter eingestellt ist.

Kurze Beschreibung der Figuren

Bevorzugte weitere Ausführungsformen der Erfindung werden durch die nachfolgende Beschreibung der Figuren näher erläutert. Dabei zeigt:

Figur 1                einen vorgegebenen Verlauf für Intensität und Farbtemperatur;

Figur 2                einen weiteren vorgegebenen Verlauf für Intensität und Farbtemperatur;

Figuren 3a, 3b, 3c                weitere Beispiele für vorgegebene Verläufe sowie Verläufe von Maximal- und Minimalwerten für die Farbtemperatur und die Beleuchtungsstärke;

Figur 3d                ein Beispiel für einen punktweise vorgegebenen Verlauf der Farbtemperatur für 21 Nutzereinstellungen und 20 Zeitpunkte.

Figur 4                einen weiteren vorgegebenen Verlauf für Intensität und Farbtemperatur;

| Figur 5 | einen veränderten Verlauf für Intensität und Farbtemperatur; |
|---|---|
| Figur 6 | einen weiteren vorgegebenen Verlauf für Intensität und Farbtemperatur; |
| Figur 7 | einen weiteren veränderten Verlauf für Intensität und Farbtemperatur; |
| Figuren 8a, 8b, 8c, 8d, 8e | verschiedene Ausführungsformen der grafischen Darstellung des Wertes der eindimensionalen Benutzereingabe; |
| Figur 9 | ein Beispiel für die Abhängigkeit der melanopisch tageslichtäquivalenten Beleuchtungsstärke von der Beleuchtungsstärke und der Farbtemperatur; |
| Figuren 10a, 10b, 10c, 10d, 10e | eine Ausführungsform der grafischen Darstellung des vorgegebenen Verlaufs und verschiedener veränderter Verläufe für Intensität und Farbtemperatur; |
| Figuren 11a, 11b, 11c | eine weitere Ausführungsform der grafischen Darstellung des Wertes der eindimensionalen Benutzereingabe; |
| Figuren 12a, 12b | weitere Ausführungsformen der grafischen Darstellung des Wertes der eindimensionalen Benutzereingabe kombiniert mit einer quasianalogen Darstellung der Benutzereingabe als Pfeil; und |
| Figur 13 | schematisch eine Ausführungsform eines erfindungsgemäßen Beleuchtungssystems. |

Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

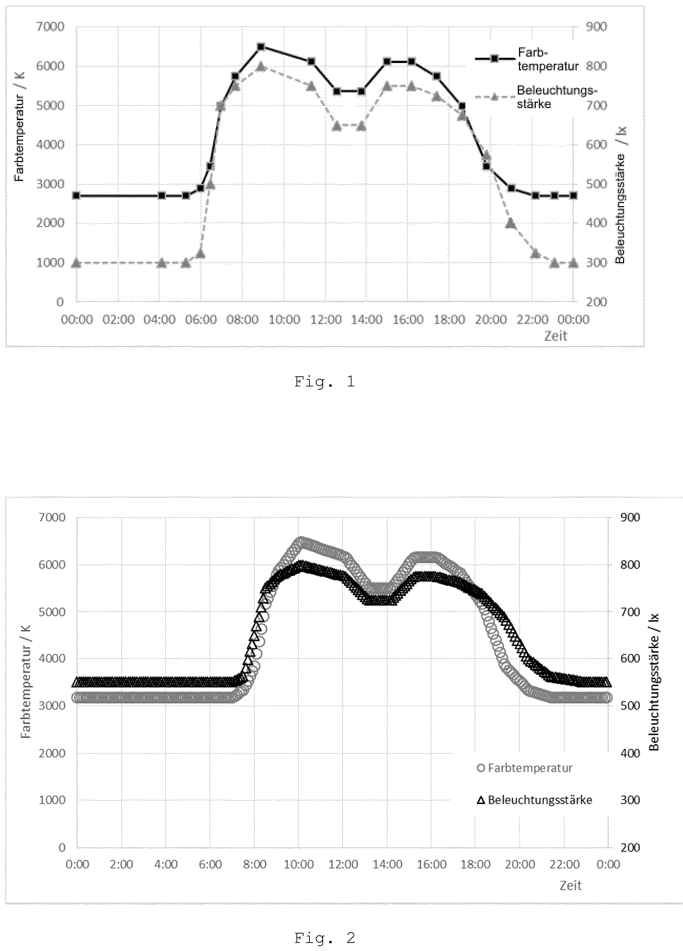

In Figur 1 ist ein vorgegebener Verlauf für Intensität (Intensity) und Farbtemperatur (CCT, correlated color temperature) dargestellt. Eine Steuervorrichtung eines Beleuchtungssystems kann aufgrund dieser vorgegeben Verläufe Intensität und Farbtemperatur der zum Beleuchtungssystem gehörenden Leuchtmittel automatisch und dynamisch (zeitgesteuert) so einstellen, dass eine im Sinne des Human Centric Lighting vorteilhafte Beleuchtung entsteht.

Die Definition der Dynamik erfolgt durch Vorgabe bestimmter Stützstellen, welche zu definierten Zeitpunkten t, die der Tageszeit entsprechen, dazu gehörende Werte für Beleuchtungsstärke (Beleuchtungsstärke und Intensität des Lichts werden im Folgenden austauschbar verwendet) und Farbtemperatur vorgeben. Für Zeiten zwischen den definierten Stützstellen können Zwischenwerte von der Steuervorrichtung automatisch interpoliert werden, damit gleichmäßige und für den Nutzer nicht merkbare Übergänge von einer zur nächsten Stützstelle möglich sind.

Alternativ dazu ist die Vorgabe von zusätzlichen Stützstellen für eine feinere Abstufung möglich, wie dies in Figur 2 dargestellt ist. Dann kann die Interpolation entfallen. Die Abstufung ist dann vorzugsweise so fein sein, dass die Wahrnehmbarkeitsschwelle bei Farb- oder Helligkeitsänderungen nicht überschritten wird, damit keine Störung des Nutzers erfolgt.

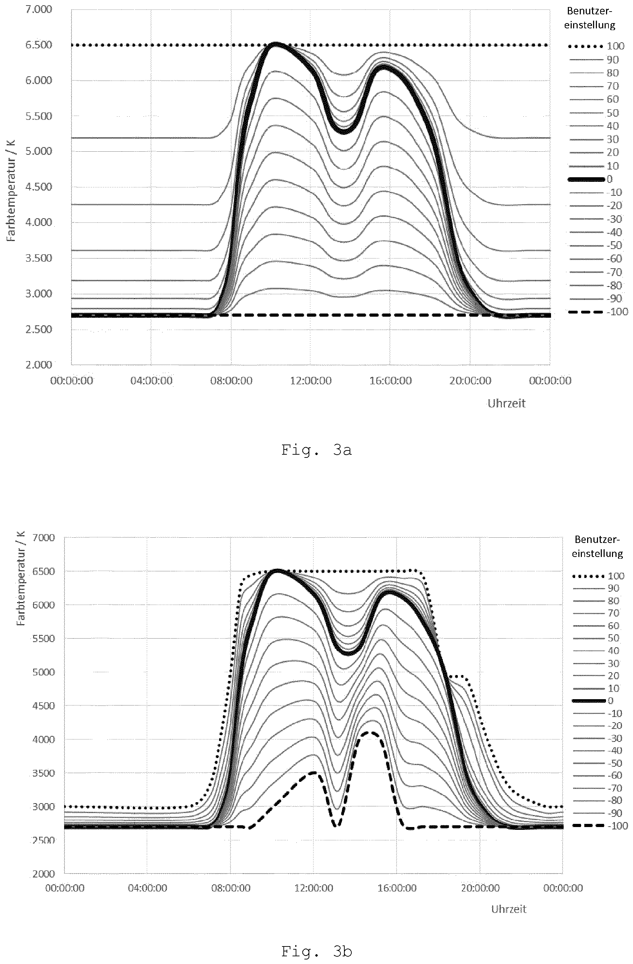

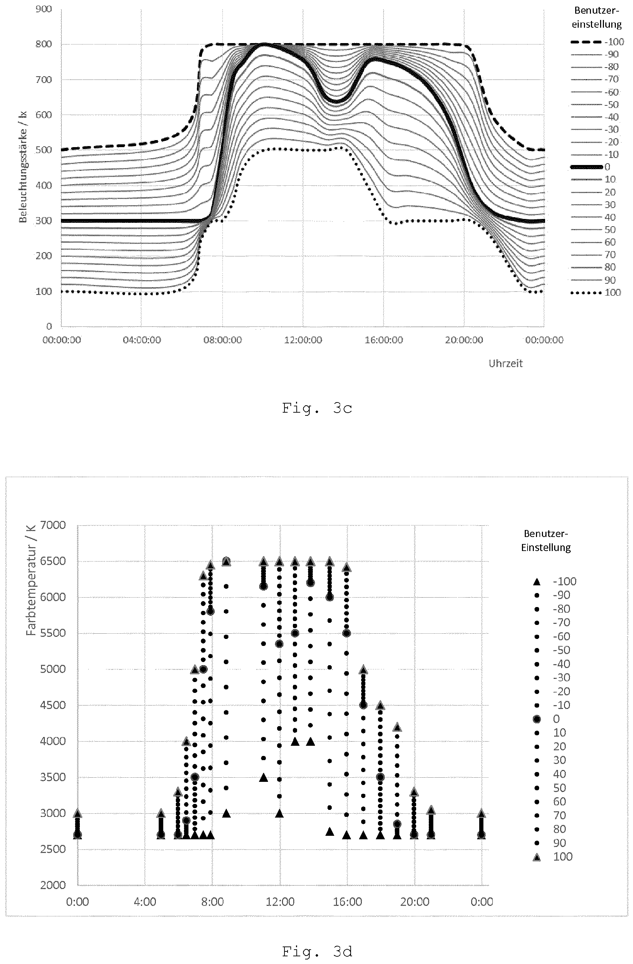

In den Figuren 1 und 2 sowie in den nachfolgend beschriebenen Figuren 3 bis 7 ist jeweils links die Farbtemperatur in Kelvin (K) und (bis auch Figur 3) rechts die Beleuchtungsstärke in Lux (lx) aufgetragen. Die Verläufe können in der Steuerungsvorrichtung direkt als derartige physikalische Größen, aber auch als andere Werte, aus denen physikalische Größen errechnet werden können, abgespeichert sein.

Die Zeiten, für die Stützstellen definiert sind, können in einer Ausführungsform abhängig von astronomischen Daten (z.B. Ortszeit, Zeiten von Sonnenauf- und -untergang, geografische Lage) verändert werden. Dies kann manuell oder automatisch, programmgesteuert erfolgen. Damit kann z.B. automatisch der Zeitpunkt dem der Anstieg von Beleuchtungsstärke und Farbtemperatur am Morgen beginnt, an die Zeit des Sonnenaufgangs angepasst werden.

Der vorgegebene zeitliche Verlauf $S$ eines Lichtparameters $X$ kann ausgedrückt werden als $S_{X,0}(t)$. Beispielsweise kann der vorgegebene zeitliche Verlauf der Intensität (oder Beleuchtungsstärke) als $S_{B,0}(t)$ und der vorgegebene zeitliche Verlauf der Farbtemperatur als $S_{T,0}(t)$ ausgedrückt werden. Falls astronomische Daten berücksichtigt werden, wie oben beschrieben, ergeben sich für verschiedene Tage im Jahr und verschiedene geografische Lagen unterschiedliche Funktionen.

Vorstehend wurde bislang eine dynamische Beleuchtungssteuerung ohne Benutzereingriff beschrieben, wie sie heute dem fortschrittlichen Stand der Technik entspricht. Diese zeitabhängige Steuerung von Farbtemperatur und Helligkeit kann durch weitere überlagerte Funktionen verändert werden. Dabei werden die Stützstellen für Beleuchtungsstärke und Farbtemperatur, die ursprünglich für jeden Zeitpunkt t eine feste Anfangs- oder Grundeinstellung für Beleuchtungsstärke $S_{B,0}(t)$ und Farbtemperatur $S_{T,0}(t)$ bestimmen, für jeden Zeitpunkt nach einer überlagerten Funktion verändert. Diese überlagerten Funktionen können definiert sein durch äußere Signale wie z.B. Nutzerschnittstellen oder Sensoren. Aber auch Parameter wie Tages- oder Jahreszeit können darin enthalten sein. Damit kann der Benutzer individuelle Eingriffe in das System vornehmen und die vordefinierten Einstellungen verändern.

Dies erlaubt dem Benutzer, die Einstellung für Beleuchtungsstärke und Farbtemperatur entsprechend dieser überlagerten Funktionen $f_T(t,x)$ für die Farbtemperatur und $f_B(t,x)$ für die Beleuchtungsstärke zu verändern.

Somit ergeben sich für die geänderten Einstellungen $S_B(t,x)$ und $S_T(t,x)$ für Beleuchtungsstärke und Farbtemperatur zum Zeitpunkt t die folgenden Gleichungen:

$$S_B(t,x) = S_{B,0}(t) \cdot f_B(t,x)$$

$$S_T(t,x) = S_{T,0}(t) \cdot f_T(t,x)$$

Dabei steht der Parameter x für einen Wert, der sich aus verschiedenen anderen Parametern errechnen kann. x kann dabei primär oder ausschließlich durch eine vom Nutzer gewählte Einstellung an einem Nutzerinterface bestimmt sein, wie z.B. eine gewünschte Verstellung zu höheren oder niedrigeren Werten. x kann aber auch durch einen externen Sensor beeinflusst werden, der bei Abwesenheit des Nutzers die Grund-Einstellung auf niedrige Werte bis hin zu Null führt, oder der abhängig von Tageslichtverfügbarkeit die Helligkeit zurückfährt.

Wesentlich dabei ist, dass die Verstellung der Grundeinstellung nicht nur statisch den Augenblickswert verändert, sondern das gesamte Profil der Lichtdynamik für jeden Zeitpunkt t.

Dies ist beispielhaft für die Farbtemperatur in Figur 3a dargestellt. Dort ist die Grundeinstellung als kräftige durchgezogene Linie dargestellt, entsprechend einer Benutzereingabe von 0. Der Maximalwert, der in diesem Fall durch die technischen Möglichkeiten der Beleuchtungsanlage begrenzt ist, ist als gepunktete Linie bei 6500 K dargestellt. Der Minimalwert entsprechend bei 2700 K als unterbrochene Linie.

Für Benutzereingaben von -100 bis +100 sind die resultierenden Verläufe für die Farbtemperatur als Kurvenschar gezeigt.

Der Umfang der Verstellmöglichkeit, d.h. wie weit die Einstellung des Beleuchtungssystems von der Grundeinstellung $S_{X,0}(t)$ abweichen darf oder welche Minimal- und Maximalwerte zulässig sind, kann dabei in bestimmten Grenzen eingeschränkt werden.

Üblicherweise sind diese Grenzen durch die technischen Möglichkeiten der Beleuchtungsanlage gegeben, z.B. maximale Intensität eines Leuchtmittels oder technisch möglicher Bereich für die Farbtemperatur. In einer Ausführungsform können diese technischen Grenzen weiter eingeschränkt werden, indem für die maximalen und minimalen Einstellwerte für Beleuchtungsstärke und Farbtemperatur jeweils eine oder zwei Grenzfunktionen definiert werden, welche Maximal- und/oder Minimalwerte für Farbtemperatur und für Beleuchtungsstärke in Abhängigkeit von der Tageszeit t definieren.

Denkbar sind auch alternative oder zusätzliche Grenzen, die in Abhängigkeit von anderen Parametern wie der Jahreszeit oder von Eigenschaften von Nutzergruppen festgelegt werden.

Figur 3b zeigt entsprechend die Grundeinstellung, d.h. den vorgegeben Verlauf am Beispiel der Farbtemperatur als kräftige durchgezogene Kurve, entsprechend einer Benutzereingabe von 0, abhängig von der Tageszeit. Die obere, gepunktete Kurve zeigt beispielhaft eine Grenzfunktion für die maximale Farbtemperatur, die zu einer bestimmten Zeit eingestellt werden kann. Dabei ist der maximale Wert von etwa 6500 K technisch bedingt, aber in den Morgen- und Abendstunden wird die maximale Farbtemperatur weiter auf geringere Werte begrenzt.

Die untere, gestrichelte Kurve zeigt entsprechend die minimale Farbtemperatur, die eingestellt werden kann. Dabei ist im dargestellten Fall der minimale Wert von etwa 2700 K technisch bedingt, aber tagsüber wird die minimale Farbtemperatur zeitweise auf höhere Werte begrenzt. In Figur 3b sind darüber hinaus beispielhaft Farbtemperaturverläufe dargestellt, die sich aus Benutzereingaben zwischen -100 und +100 ergeben können.

In Figur 3c sind als weiteres Beispiel ein vorgegebener Verlauf (kräftige durchgezogene Linie) und obere (gestrichelte Linie) und untere (gepunktete Linie) Grenzverläufe für die Beleuchtungsstärke dargestellt. Diese können eine andere Charakteristik aufweisen als die Verläufe der Farbtemperatur. Dennoch reagieren sie auf die gleiche Benutzereingabe, auf die auch der Verlauf der Farbtemperatur reagiert.

Der genaue Verlauf dieser Farbtemperatur- oder Intensitätsverläufe hängt von der Definition der Funktionen $f_T(t,x)$ und $f_B(t,x)$ ab und ist in den Figuren 3a, 3b und 3c lediglich beispielhaft gezeigt.

Während in den Figuren 3a, 3b und 3c der Verlauf der Farbtemperatur- oder Intensitätsverläufe als kontinuierliche (stetige) Funktionen dargestellt ist, können die Verläufe für verschiedene vorgegebene Zeitpunkte und vorgegebene Benutzereingabeen durch feste Wertepunkte beschrieben werden. Zeitlich oder hinsichtlich Benutzereingabe dazwischen liegende Werte können zwischen den definierten Wertepunkten interpoliert werden. Dies ist beispielhaft in Figur 3d dargestellt. Dort sind sowohl für die Uhrzeit als auch für die Benutzereingabe jeweils nur mehrere vorgegebene Werte zulässig und für jedes dieser Wertepaare ist eine bestimmte Farbtemperatur vorgegeben. Für die Beleuchtungsstärke können ebenfalls entsprechende Werte vorgegeben sein.

Die Grenzfunktionen können dazu genutzt werden, die Veränderbarkeit der Lichteinstellung zu begrenzen. Beispielsweise ist es sinnvoll, am Abend keine sehr hohen Werte für die Farbtemperatur zuzulassen, um mögliche Störungen der circadianen Rhythmik der Nutzer und einen negativen Einfluss auf den Schlaf zu minimieren.

Entsprechend kann zum Beispiel auch eine Mindestbeleuchtungstärke $S_{B,min}(t)$ definiert sein, sodass gilt $S_B(t,x) >= S_{B,min}(t)$ für alle Zeiten oder zumindest für bestimmte Zeiten.

So kann in einer Ausführungsform während des Tages eine maximale Farbtemperatur von 6500 K zugelassen sein, wenn die Anlage dies technisch zulässt. Am Abend nach 21:00 Uhr kann der Maximalwert der Farbtemperatur $S_{T,max}(t)$ für t>21:00 auf 4000 K begrenzt werden. Wenn die Grundeinstellung, d.h. der vorgegebene Verlauf der Farbtemperatur $S_{T,0}(t)$ für diese Zeit eine Farbtemperatur von 2700 K vorsieht, kann somit in diesem Beispiel auch durch Nutzereingriffe maximal eine Farbtemperatur von 4000 K erreicht werden. Dies ermöglicht die Einschränkung von Nutzereingriffen auf Einstellungen, die als sinnvoll definiert wurden.

Üblicherweise wird für eine biologisch "sinnvolle" Einstellung während des Tages normalerweise eine hohe Farbtemperatur und hohe Beleuchtungsstärke als Grundeinstellung gewählt; für den Abend und die Nacht eine geringe Farbtemperatur und eine geringere Beleuchtungsstärke.

Solche Grenzfunktionen können als vorgegebene "sinnvolle" Funktionen im Beleuchtungssystem einprogrammiert sein und/oder bei der Inbetriebnahme oder von erfahrenen Nutzern auch konfiguriert werden.

Für die Einschränkungen für minimale und maximale Werte von Farbtemperatur und/oder Beleuchtungsstärke können neben der Tageszeit auch weitere Parameter berücksichtigt werden. So kann ein Sensor für Tageslicht oder Anwesenheit von Personen ein zusätzliches Signal geben, welches die maximale Intensität, die von den Leuchtmitteln abgegeben wird, reduziert.

Darüber hinaus können auch weitere Funktionen definiert sein, welche bestimmte Einstellungen oder Kombinationen von Einstellungen ausschließen. So sind Kombinationen von sehr hoher Farbtemperatur bei gleichzeitig niedriger Beleuchtungsstärke nicht sinnvoll, weil sie vom Nutzer als unangenehm empfunden werden. Beispielsweise kann daher die maximale Farbtemperatur $T_N$ abhängig von der eingestellten Beleuchtungsstärke B definiert werden. Dies kann in einer Ausführungsform folgendermaßen erfolgen:

$$T_N <= 10 \cdot B \text{ mit } T_N \text{ in K, B in Lux für B>270 lx}$$

und

$$T_N = 2700 \text{ K für B<=270 lx}$$

Zur Eingabe einer gewünschten Abweichung vom vorgegebenen Verlauf der Lichtparameter wird vorzugsweise ein Eingabemittel (auch Nutzerschnittstelle oder Bedienelement genannt) verwendet. In einer Ausführungsform ermöglicht ein Bedienelement eine Abweichung von der oben beschriebenen Anfangs-Einstellung $S_{B,0}(t)$ und $S_{T,0}(t)$ eindimensional, also nur in zwei Richtungen, die im Folgenden mit "up" und "down" bezeichnet werden.

Das Bedienelement kann ein Drehknopf, ein Schieberegler, ein Taster mit einer "up" und einer "down"-Funktion sein, oder ein vergleichbares Element, das real existiert oder virtuell auf der Bedienoberfläche eines Nutzerinterfaces angeordnet ist. Wesentliches Merkmal ist, dass die Eingabeeinheit nur eine eindimensionale Größe, z.B. Anzahl von Einheiten in Richtung "up" oder "down", abgibt, diese eindimensionale Größe aber anhand hinterlegter Funktionen sich auf die Abweichung von der Grundeinstellung für Beleuchtungsstärke und Farbtemperatur auswirkt.

Eine Einstellung E des Bedienelements entspricht daher einer vom Nutzer gewünschten Veränderung der vorgegebenen Verläufe (Steuerkurven) für Farbtemperatur und Beleuchtungsstärke. Die Einstellung des Bedienelements wirkt nicht unmittelbar auf die Farbtemperatur und Beleuchtungsstärke der Leuchtmittel des Beleuchtungssystems, sondern auf die Funktionen, welche Farbtemperatur und Beleuchtungsstärke beschreiben. Gleiche Veränderungen an der Einstellung E können somit unterschiedliche Wirkungen auf die tatsächliche Veränderung von Farbtemperatur und Beleuchtungsstärke haben, z.B. abhängig von der Tageszeit. Da in die Funktion zur Veränderung der Grundeinstellung weitere Parameter eingehen können, können komplexe Abhängigkeiten realisiert werden. So ist denkbar, dass zu bestimmten Tageszeiten Änderungen der Farbtemperatur in die eine oder andere Richtung eingeschränkt werden oder dass sich in Abhängigkeit von den aktuellen Grundeinstellungen gewünschte Änderungen des Nutzers in unterschiedlichem Maße auf Farbtemperatur und Beleuchtungsstärke auswirken.

Das Betätigen der "up"-Funktion (z.B. Drehen eines Drehknopfes im Uhrzeigersinn) kann eine Veränderung von Beleuchtungsstärke und/oder Farbtemperatur zu höheren Werten hin bewirken. Bei Betätigung der "down"-Funktion kann die Veränderung entsprechend zu niedrigeren Werten hin erfolgen.

Der Grad der Veränderung V ist für Beleuchtungsstärke B und Farbtemperatur T in unterschiedlichen Funktionen $V_B=f_B(E,t,x)$ und $V_T=f_T(E,t,x)$ definiert, welche u.a. von der Einstellung E des Bedienelements bestimmt werden.

Die Einstellung E kann der Position eines Schiebe- oder Drehstellers entsprechen. Sie kann auch der Zahl der abgegebenen Impulse oder der Drehgeschwindigkeit eines Drehgebers entsprechen, oder einem anders eingegebenen oder errechneten Wert (z.B. über eine Geste oder einen Sensor, oder anders) für das Maß einer vom Nutzer gewünschten oder an seinen Erfordernissen orientierten Verstellung.

Dies schließt auch automatisch generierte Werte für E ein, die z.B. von einem Helligkeits- oder Anwesenheitssensor stammen können oder aus Nutzerdaten o.ä. errechnet werden.

Für die neuen Einstellungen für Beleuchtungsstärke und Farbtemperatur gilt beispielsweise

$$S_B(t)=S_{B,0}(t)+V_B \quad und \quad S_T(t)=S_{T,0}(t)+V_T$$

Für das Beispiel Beleuchtungsstärke wäre in diesem Beispiel die Funktion entsprechend der Definition wie oben beschrieben

$$f(t,x) =1 + V_B/S_{B,0}(t)$$

und

$$S_B(t,x) =S_{B,0}(t) \cdot (1 + V_B/S_{B,0}(t))$$

Weitere Parameter, die in die Funktionen $V_B$ und $V_T$ eingehen können, können die folgenden sein:

- Die Zeit t, welche durch Ortszeit und Jahreszeit bestimmt sein kann.

- Der Zeitpunkt zu dem eine vorhergehende Veränderung durchgeführt wurde. Dadurch ist es möglich, die Zeit zu begrenzen, für die eine bestimmte Veränderung gehalten wird.
  Damit kann z.B. erreicht werden, dass die Veränderung, die ein Nutzer einstellt nur für eine bestimmte Zeit wirksam ist und danach wieder auf die Grundeinstellung zurückgeht.

- Beliebige weitere Parameter, die in der Formel oben durch "x" symbolisiert sind.

Dies kann in einer Ausführungsform die Differenz der Grund-Einstellung $S_{B,0}(t)$ bzw. $S_{T,0}(t)$ zum jeweiligen Maximalwert bzw. zum Minimalwert für Beleuchtungsstärke und Farbtemperatur der Beleuchtungsanlage sein. Damit kann beispielsweise erreicht werden, dass ein Veränderungswunsch in Richtung zu niedrigeren Werten hin eine stärkere Auswirkung auf die Erniedrigung der Farbtemperatur hat, wenn diese noch relativ hoch eingestellt ist, und erst bei weiterer Reduzierung des Einstellwerts E dann auch eine Reduzierung der Beleuchtungsstärke realisiert wird. Umgekehrt kann bei einem gleichen durch den Einstellwert E bestimmten Reduzierungswunsch bei hoher Beleuchtungsstärke und mittlerer Farbtemperatur zunächst die Beleuchtungsstärke reduziert werden.

Die Kombinationen von niedrigen Beleuchtungsstärken bei hoher Farbtemperatur sowie von hohen Beleuchtungsstärken bei niedriger Farbtemperatur werden erfahrungsgemäß von Nutzern als unangenehm empfunden. Weiterhin sind hohe Beleuchtungsstärken bei niedriger Farbtemperatur auch energetisch nicht sinnvoll, da die gleiche Wirkung auf das biologische System üblicherweise auch bei reduzierter Beleuchtungsstärke und höherer Farbtemperatur erreicht werden kann.

Wenn der Nutzer Veränderungen vornimmt, können bei einem erfindungsgemäßen Beleuchtungssystem diese Grundprinzipien weitgehend beachtet werden.

Ein Veränderungswunsch zu höheren Werten hin ("up") könnte sich also zunächst stärker auf die Beleuchtungsstärke auswirken als auf die Farbtemperatur. Erst beim Nutzerwunsch, sehr stark in Richtung "up" zu verändern, wird auch die Farbtemperatur "nachgezogen".

Umgekehrt könnte ein Wunsch zu geringeren Werten ("down") zunächst die Farbtemperatur betreffen, wenn sich diese auf einem hohen Grundniveau befindet. Die Beleuchtungsstärke wird entsprechend "nachgezogen".

In den folgenden Beispielen werden zum Zweck der Veranschaulichung für die Einstellung E Werte zwischen -100 und +100 als Zahlenwert verwendet. Auch darüber hinausgehende Werte oder jede andere Skalierung ist denkbar. Die Einstellung des Bedienelements wird über ein analoges oder digitales Signal vom Bedienelement an die Steuerung übergeben.

Die Begriffe $S_T(t)$ und $S_B(t)$ für die Einstellungen von Farbtemperatur und Beleuchtungsstärke werden hier so verwendet, dass die Einstellung und der Wert selbst synonym gebraucht werden, auch wenn intern in der Steuervorrichtung ein digitaler Wert errechnet wird, der nur den lichttechnischen Werten entspricht. Dies kann intern ein Prozentsatz, ein 8- oder 16-Bit Steuerwert oder ähnliches sein.

Entsprechendes gilt für die Farbtemperatur, die intern in der Steuervorrichtung oder extern im Betriebsgerät eines Leuchtmittels in eine Repräsentation als Farbort x,y oder als ein Verhältnis von Pulsweitenmodulation zweier oder mehrerer Ausgangskanäle eines Lichtsteuerungssystems umgerechnet werden kann.

In den folgenden Beispielen seien als Grundeinstellung für eine Zeit $t_1$ eine Beleuchtungsstärke $S_{B,0}(t_1)$=650 lx und eine Farbtemperatur von $S_{T,0}(t_1)$=5350 K vorgegeben. Als Minimalwerte seien $S_{B,min}(t_1)$ =300 lx und $S_{T,min}(t_1)$ =2700 K und als Maximalwerte seien $S_{B,max}(t_1)$ =800 lx und $S_{T,max}(t_1)$ =6500 K für Beleuchtungsstärke und Farbtemperatur zur Zeit $t_1$ definiert.

Ein Nutzereingriff mit einer gewünschten Verstellung von E=+50 kann wie folgt behandelt werden:

a) "Lineare" Reaktion:

In diesem Beispiel werden Beleuchtungsstärke und Farbtemperatur proportional der Einstellung E verändert. Dabei sei vorgegeben, dass eine Veränderung von E um 1 einer Veränderung der Farbtemperatur um 20 K entspricht: $V_T(t_1,1)$=20 K. Eine Veränderung von E um 50 entspricht also $V_T(t_1,50)$=1000 K. In diesem Beispiel gelte dies für alle Zeiten t und die Abhängigkeit von V und E sei linear. Dann ergibt sich für die veränderte Farbtemperatur

```
S_T(t_1) = MIN[S_T,_0(t_1)+V_T(t_1,50); S_T,_max(t1)] =
         = MIN[(5350 K + 1000 K); 6500 K] =
         = 6350 K.
```

Für die Beleuchtungsstärke sei vorgegeben, dass eine Veränderung von E um 1 einer Veränderung der Beleuchtungsstärke um 4 lx entspricht: $V_B(t_1,1)$=4 lx. Eine Veränderung von E um 50 entspricht also $V_B(t_1,50)$=200 lx. In diesem Beispiel gelte auch dies für alle Zeiten t und die Abhängigkeit von V und E sei linear. Dann ergibt sich für die veränderte Beleuchtungsstärke

```
S_B(t_1) = MIN[S_B,_0(t_1)+VB(t_1,50); S_B,_max(t_1)] =
         = MIN[(650 lx + 200 lx); 800 lx] =
         = 800 lx.
```

In diesem einfachen Beispiel werden Maximal- bzw. Minimalwerte relativ schnell erreicht. Die grundsätzliche Kurvenform der dynamischen Kurve S(t) wird dadurch verändert. Maximal- bzw. Minimalwerte werden früher erreicht und bleiben für längere Zeiten erhalten. Komplexere Abhängigkeiten sind hier nicht gegeben.

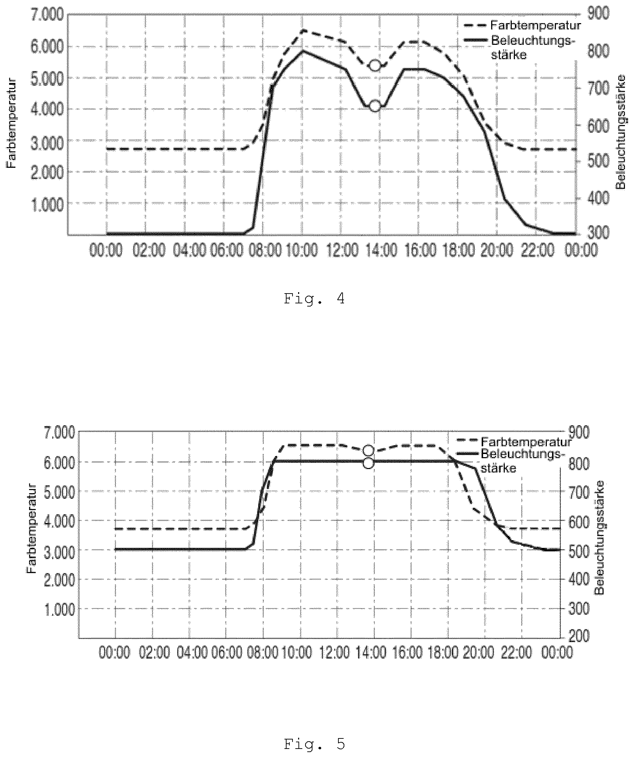

Für das obenstehende Beispiel a) ist in Figur 4 der vorgegebene Verlauf für Farbtemperatur und Beleuchtungsstärke und in Figur 5 der veränderte Verlauf dieser Lichtparameter für eine Veränderung der Benutzereingabe um +50 dargestellt.

b) Lineare Reaktion mit feinerer Abstufung:

In diesem Beispiel entspricht eine Veränderung von E=1 einer Veränderung von 1 % der Differenz zwischen dem Wert für die Grundeinstellung $S_{T,0}(t_1)$ und dem Maximalwert $S_{T,max}(t_1)$. Der Maximalwert sei, entgegen dem im obigen Beispiel, für die Zeit $t_1$ auf 6000 K begrenzt. Dann entspricht eine Veränderung von E um 1 einer Veränderung der Farbtemperatur $V_T(t_1,1)$ um 1 % der Differenz 6000 K - 5350 K = 650 K, also um 6,5 K. Somit ist $V_T(t_1,50)$=325 K und

$$S_T(t_1) = MIN[S_{T,0}(t_1)+V_T(t_1,50); S_{T,max}(t1)] =$$
$$= MIN[(5350\ K + 325\ K); 6000\ K] =$$
$$= 5675\ K.$$

Mit entsprechenden Vorgaben für die Veränderung der Beleuchtungsstärke entspricht eine Veränderung von E um 1 einer Veränderung der Beleuchtungsstärke $V_B(t_1,1)$ um 1 % der Differenz 800 lx - 650 lx = 150 lx, also um 1,5 lx. Somit ist

$$V_B(t_1,50)=75\ lx$$

und

$$S_B(t_1) = MIN[S_{B,0}(t_1)+VB(t_1,50); S_{B,max}(t_1)] =$$
$$= MIN[(650\ lx + 75\ lx); 800\ lx] =$$
$$= 725\ lx.$$

Durch Bezug der gewünschten Veränderung auf die Differenz zwischen dem Wert der Grundeinstellung und dem Maximalwert zur Zeit $t_1$ ist die Einstellung feiner abgestuft und die grundsätzliche Kurvenform bleibt erhalten. Der Verlauf wird eher gedehnt oder gestaucht. Minimal- bzw. Maximalwerte werden zu gleichen Zeiten erreicht wie vor dem Nutzereingriff.

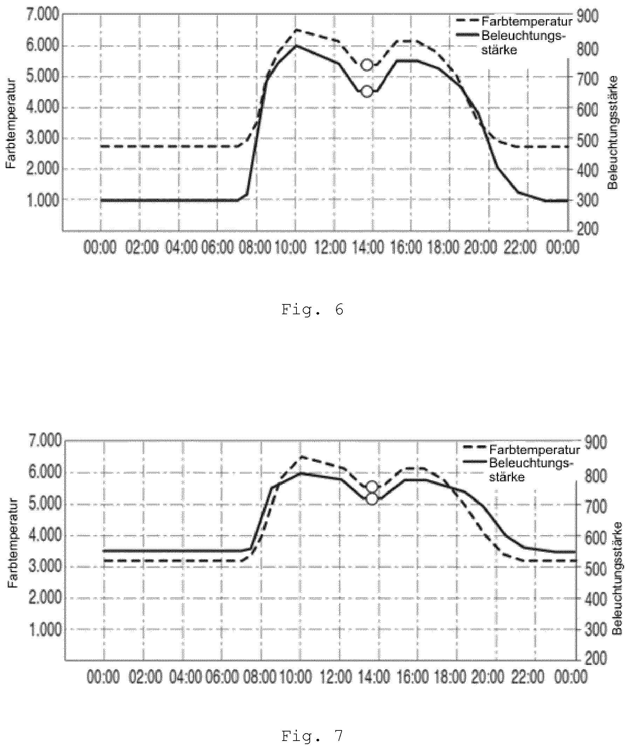

Für das obenstehende Beispiel b) ist in Figur 6 der vorgegebene Verlauf für Farbtemperatur und Beleuchtungsstärke und in Figur 7 der veränderte Verlauf dieser Lichtparameter für eine Veränderung der Benutzereingabe um +50 dargestellt.

Es sind beliebige andere Funktionen für die Zuordnung der Einstellung E zu Veränderungen V denkbar. Bevorzugt sind solche Änderungen, bei denen der Zusammenhang zwischen Einstellung E und Veränderung V für Beleuchtungsstärke und Farbtemperatur durch eine monoton steigende Funktion beschrieben wird, d.h. dass bei steigenden Werten von E Beleuchtungsstärke und/oder Farbtemperatur ebenfalls ansteigen oder zumindest erhalten bleiben. Umgekehrt sollten mit fallenden Werten von E auch Beleuchtungsstärke und/oder Farbtemperatur fallen oder zumindest erhalten bleiben. Negative Werte von E bedeuten dabei eine Reduzierung von Beleuchtungsstärke und/oder Farbtemperatur entsprechend den Beispielen a) und b), aber in andere Richtung.

c) Komplexe (nicht-lineare) Reaktion:

In diesem Beispiel, das Besonderheiten im Hinblick auf nicht-visuelle Wirkungen berücksichtigt, verändert sich die Beleuchtungsstärke nach linearen Funktionen wie in Beispiel b) beschrieben, während sich die Farbtemperatur nach einer nicht-linearen Funktion verändert.

Mit den beispielhaften Einstellungen, die im Beispiel b) verwendet werden, könnten folgende Funktionen definiert sein. Für die Beleuchtungsstärke gelte identisch zu Beispiel b)

$$V_B(t_1,50)=75\ lx\ und\ S_B(t_1)=725\ lx.$$

Für die Farbtemperatur sei eine Abhängigkeit von der 3. Potenz der Veränderung E definiert:

$$V_T(t_1,E) = (E/100)\hat{}3 \cdot (S_{T,max}(t_1)- S_{T,0}(t_1))$$

Für E=50 ergibt sich damit

$$V_T(t_1,50) = 0,5\hat{}3 \cdot (6000\ K - 5350\ K) = 0,125 \cdot 650\ K = 81\ K$$

und somit

$$S_T(t_1) = 5350 \text{ K} + 81 \text{ K} = 5431 \text{ K}.$$

Insbesondere am Abend, wenn die Anlage im Grundzustand auf niedrige Farbtemperaturen eingestellt ist, ermöglicht eine solche Abhängigkeit, die Farbtemperatur zunächst relativ wenig zu verändern, während die Beleuchtungsstärke deutlich verändert wird. Erst dann, wenn sich der vom Nutzer vorgewählte Einstellwert für die Veränderung dem möglichen Maximum von 100% (E=100) annähert, wird die Wirkung auf eine Veränderung der Farbtemperatur stärker.

Im Fall einer Reduzierung der Einstellwertes gegenüber der Grundeinstellung kann ein entsprechend umgekehrtes Verhalten realisiert werden, sodass sich die Veränderung zunächst stärker auf die Farbtemperatur auswirkt und erst später auf die Beleuchtungsstärke.

Vorzugsweise ist eine minimale Beleuchtungsstärke definiert, welche als Mindestwert immer gehalten wird, damit ausreichende Sehqualität sichergestellt ist. In Arbeitsumgebungen wie Büros oder Besprechungsräumen kann dieser minimale Wert durch Normen vorgegeben sein. Der Wert von $S_{B,min}(t)$ sollte diesem minimalen Wert entsprechen. In der "normalen" Dynamik - auch nach Nutzereingriff - wird dann wie oben beschrieben dieser Minimalwert nicht unterschritten.

In manchen Fällen kann es jedoch wünschenswert sein, eine weiter reduzierte Helligkeit einzustellen, z.B. wenn in einem Raum eine entspannte Stimmung geschaffen werden soll, oder wenn nur eine sehr geringe Helligkeit gewünscht ist, um z.B. einen Film oder eine Präsentation zu betrachten.

In diesem Fall kann ein weiteres Betätigen der "down"-Funktion, wenn bereits eine maximale Reduzierung von Beleuchtungsstärke und Farbtemperatur bis hin zu den oben beschriebenen Minimalwerten erreicht ist, als Wunsch des Nutzers gesehen werden, unter diese "Minimalwerte" bis hin zum Abschalten der Beleuchtung zu gehen, entsprechend einer Dimmfunktion. In diesem Fall kann bei konstant gehaltener minimaler Farbtemperatur die Beleuchtungsstärke weiter reduziert werden.

Da die Einstellungen selbst und die Veränderungen der Einstellung für den Nutzer nicht unmittelbar erkennbar sind, kann es sinnvoll sein, dem Nutzer eine Rückmeldung zu geben, was die veränderten Einstellungen bewirken und welche Veränderungen er für die aktuelle und die später kommenden Lichteinstellungen erwarten kann.

Eine solche Veränderung kann für den Nutzer z.B. grafisch durch ein Diagramm visualisiert werden, welches den veränderten Verlauf von Beleuchtungsstärke und Farbtemperatur, ggf. im Vergleich zum vorgegebenen Verlauf anzeigt.

Solche Diagramme sind meistens sehr komplex und nicht unbedingt leicht verständlich. Daher werden im Folgenden Beispiele beschrieben, wie eine Visualisierung den Verlauf vereinfacht darstellt.

Eine derartige Visualisierung kann vorzugsweise direkt am Eingabemittel erfolgen, sodass der Benutzer bei der Veränderung der eindimensionalen Benutzereingabe die Auswirkungen unmittelbar im Blick hat. Insbesondere kann das Eingabemittel eine berührungsempfindliche Anzeigeeinrichtung aufweisen, auf der der Benutzer die gewünschte Änderung durch Berührung vornimmt.

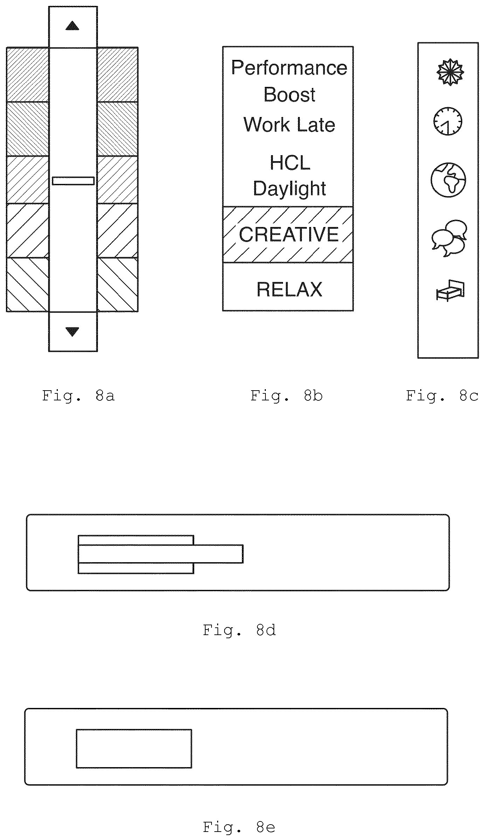

In einer Ausführungsform erfolgt die Visualisierung durch ein Balkendiagramm (horizontal oder vertikal), auf dem die gerade gewählte Einstellung für die eindimensionale Benutzereingabe hervorgehoben ist. Ein solches Balkendiagramm kann beispielsweise den Wert für die eindimensionale Benutzereingabe farblich codiert anzeigen, wie dies in Figur 8a schematisch dargestellt ist. Dabei kann für die "Normaleinstellung", d.h. für eine Dynamik gemäß dem vorgegebenen Verlauf ein "neutraler" Farbton wie weiß oder hellgelb verwendet werden. Erhöhte Werte für die eindimensionale Benutzereingabe können durch Blautöne (z.B. hellblau bis dunkelblau oder blasses Blau bis kräftiges Blau) angezeigt werden und erniedrigte Werte können durch Rot- und/oder Orangetöne (z.B. gelb bis rot) angezeigt werden. Eine solche Anzeige kann (quasi) analog, d.h. stufenlos erfolgen.

Alternativ oder zusätzlich kann die Anzeige auch Kategorien aufweisen, die beispielsweise für die entsprechende Lichtsituation stehen. Diese Kategorien können, wie in Figur 8b schematisch dargestellt, in Worten angegeben werden. In der Ausführungsform gemäß Figur 8b ist dies z.B. "HCL Daylight" für den vorgegebenen Verlauf (d.h. ohne durch den Benutzer eingegebene Abweichung) sowie "Work Late" und "Performance Boost" für erhöhte Werte der eindimensionalen Benutzereingabe. Für erniedrigte Werte wird in dieser Ausführungsform "CREATIVE" und "RELAX" verwendet. Selbstverständlich können auch andere und auch mehr oder weniger Begriffe verwendet werden.

In der Ausführungsform gemäß Figur 8c werden die Kategorien durch Symbole dargestellt. Auch hier können andere und auch mehr oder weniger Symbole verwendet werden. Es können auch Symbole und Worte gemischt verwendet werden.

Eine andere Art der Darstellung ist schematisch in Figur 8d gezeigt. Hier werden die aktuellen Werte von Beleuchtungsstärke und Farbtemperatur auf einer Skala, hier als überlagerte Balkendiagramme mit unterschiedlichen Farben, dargestellt, z.B. gelb für die Beleuchtungsstärke (schmaler Balken), blau für die Farbtemperatur (breiter Balken). Die Balken können auch untereinander oder nebeneinander angeordnet sein. Die Balken können auch ringförmig ausgeführt sein.

Aus den Werten für die Beleuchtungsstärke und Farbtemperatur kann nach einer Formel ein neuer Wert errechnet werden. Dies kann z.B. durch Multiplikation der beiden Werte oder auch Multiplikation der beiden Werte mit jeweiligen konstanten Faktoren und Addition der Produkte erfolgen.

Aus der Farbtemperatur kann bei Kenntnis der spektralen Verteilung ein Faktor bestimmt werden, der das Verhältnis von melanopisch tageslichtäquivalenter Beleuchtungsstärke nach DIN SPEC 5031-100:2015 zur visuell bewerteten Beleuchtungsstärke beschreibt.

Bei einer weißen LED-Beleuchtung mit 6500 K beträgt dieser Faktor etwa 0,8. Bei einer warmweißen LED-Beleuchtung mit 3000 K beträgt dieser Faktor etwa 0,45.

Multipliziert man die Beleuchtungsstärke mit dem nach dieser Methode berechneten Umrechnungsfaktor, so ergibt sich daraus die melanopisch tageslichtäquivalente Beleuchtungsstärke nach DIN SPEC 5031-100.

Dieses Bewertungsverfahren ist inzwischen auch im internationalen Standard CIE S 026 definiert. Die Größe, die in DIN SPEC 5031-100 als "tageslichtäquivalente Beleuchtungsstärke" definiert wurde, wird in CIE S 026 als "menalopic equivalent daylight (D65) illuminance" bezeichnet. Beide Größen sind vom Berechnungsverfahren und hinsichtlich ihrer Zahlenwerte identisch für gleiche Spektralverteilungen.

Diese Größe ist nach heutigem Stand der Kenntnis ein Maß für die Wirksamkeit des Lichts auf das biologische System bei einer bestimmten Beleuchtungsstärke und einer bestimmten Farbtemperatur im Vergleich zu Tageslicht. Auch diese Größe kann für die Visualisierung auf einer Skala dargestellt werden. Diese Ausführungsform ist schematisch in Figur 8e gezeigt. Auch hier ist neben einer linearen Darstellung auch die Darstellung als ringförmiger Balken, oder in Form einer Tachoanzeige denkbar.

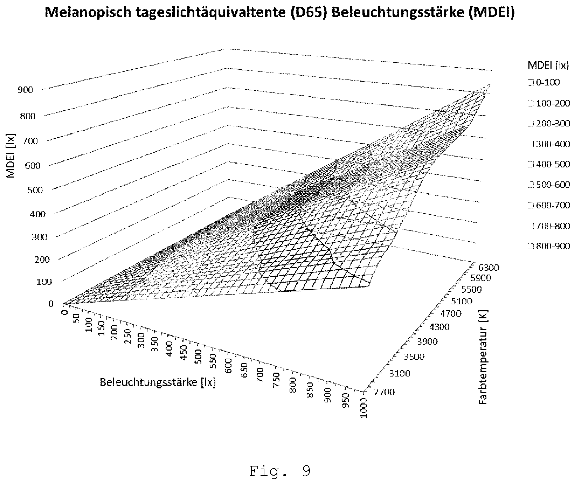

Die Abhängigkeit der melanopisch tageslichtäquivalenten Beleuchtungsstärke von der Beleuchtungsstärke und der Farbtemperatur ist für das Beispiel einer LED-Beleuchtung in Figur 9 näherungsweise gezeigt.

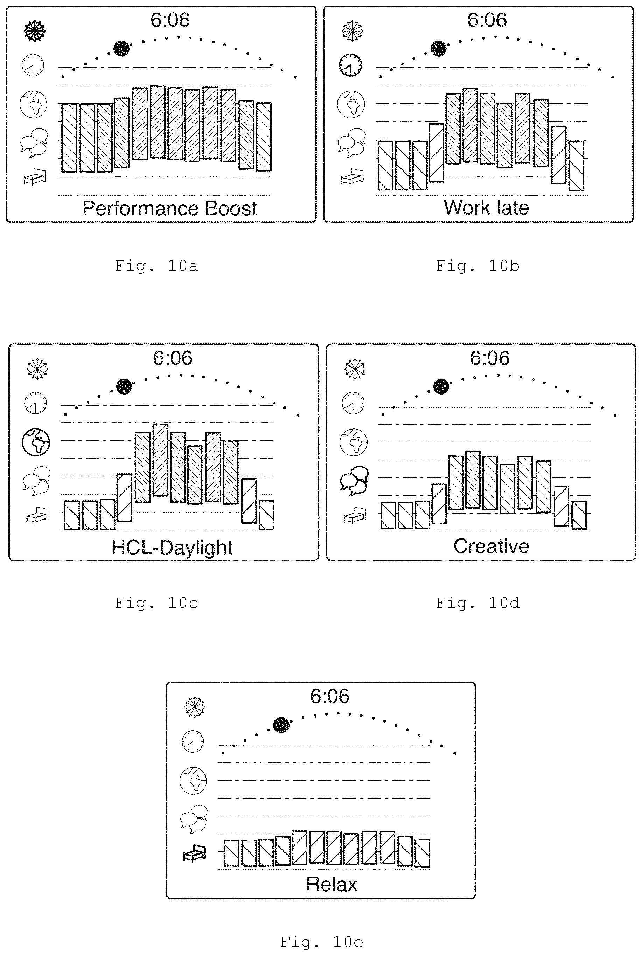

In den Figuren 10a bis 10e ist eine weitere Art der Visualisierung dargestellt. Hier werden links Symbole für verschiedene Werte für die eindimensionale Benutzereingabe dargestellt, vergleichbar mit Figur 8c. Die gerade gewählte Einstellung oder zumindest das Symbol, das der geradegewählten Einstellung am nächsten kommt, kann hervorgehoben dargestellt werden. Rechts davon wird dann jeweils der jeweilige Verlauf von Farbtemperatur und Beleuchtungsstärke auf einer horizontalen Zeitachse angezeigt. Dabei kann die Farbe der vertikalen Balken für die Farbtemperatur zum jeweiligen Zeitpunkt stehen, Beispielsweise können warm- bis neutralweiße Lichtfarben durch orangefarbige bis gelbe Balken angezeigt werden, kaltweiße Lichtfarben durch hellblaue bis kräftig blaue Balken.

Die Beleuchtungsstärke kann durch die Länge der Balken symbolisiert werden.

Gleichzeitig kann der untere Wert des Balkens durch die Farbtemperatur bestimmt werden. Dies erlaubt es, zu symbolisieren, dass höhere Farbtemperaturen eine höhere nicht-visuelle Wirkung haben.

Ein Balken entspricht in den gezeigten Beispielen dem Mittelwert aus etwa 1,5 Stunden über den gesamten Tag. So kann dem Nutzer die Einstellung symbolisiert werden. Der aktuelle Stand kann über ein Symbol (z.B. Sonnensymbol oberhalb der Balken) angezeigt werden. Der Nutzer hat die Möglichkeit, zu sehen, wie sich die Beleuchtungssituation weiter verändern wird.

Eine Visualisierung des Verlaufs von Farbtemperatur und Beleuchtungsstärke, insbesondere für die zukünftigen Werte, kann auch auf andere Weise erfolgen.

Die in den Figuren 10a bis 10e links dargestellten Symbole können den mit Bezug zu Figur 8b erwähnten Begriffen "Performance Boost", "Work Late", "HCL Daylight", "CREATIVE" und "RELAX" entsprechen.

Die Einstellung "Performance Boost" könnte auch als "Boost", "Leistungssteigernde Beleuchtung", "Konzentration" oder mit Begriffen von ähnlicher Bedeutung bezeichnet werden. Diese Einstellung wäre geeignet, Konzentration und Leistungsfähigkeit kurzfristig anzuheben, aber sie birgt das Risiko, zur falschen Zeit, z.B. durch verstärkte biologische Wirkungen am Abend, auch negativen Einfluss auf den Nutzer zu haben.

Die Möglichkeit, eine solche Einstellung zu wählen, kann durch Definition von Maximalwerten wie oben detailliert beschrieben, eingeschränkt werden. Auch eine zeitliche Begrenzung für die Einstellung der Einstellung "Performance Boost" kann definiert werden - z.B. nicht nach 22:00 Uhr. Ebenso kann die Zeitdauer, für die die Einstellung "Performance Boost" aktiviert bleibt, begrenzt werden. So könnte sich z.B. bei Auswahl der Einstellung "Performance Boost" nach 21:00 der Einstellwert E automatisch programmgesteuert alle 2-3 Minuten um einen bestimmten Betrag verringern, bis wieder die Einstellung "Work Late" (nachfolgend beschrieben) erreicht wird.

Ein Beispiel für einen veränderten Verlauf der Lichtparameter in der Einstellung "Performance Boost" ist in Figur 10a dargestellt. In Figur 3b und 3c sind dies die Verläufe, welche nahe an den oberen Grenzverläufen liegen.

Die Einstellung "Work Late" könnte auch als "Abendarbeit" oder "Konzentration (ohne circadiane Störung)", "fokussiertes Arbeiten" oder ähnlich bezeichnet werden. Diese Einstellung, bei der die Beleuchtungsstärke über die vorgegebene Ausgangseinstellung hinaus deutlich erhöht wird, während die Farbtemperatur nicht oder nur geringfügig erhöht wird, ist geeignet, um am Abend oder in der Nacht zu arbeiten, ohne eine erhebliche störende Wirkung auf das circadiane System zu haben. Sie kann jedoch auch am Tag genutzt werden, um konzentriertes Arbeiten zu fördern.

Ein Beispiel für einen veränderten Verlauf der Lichtparameter in der Einstellung "Work Late" ist in Figur 10b dargestellt. In den Figuren 3b und 3c sind dies die Verläufe, die im mittleren Bereich zwischen dem vorgegebenen Verlauf und dem oberen Grenzverlauf liegen.

Die Einstellung "HCL Daylight" könnte auch als "HCL-Modus", "Daylight", "Standardbetrieb", "Tageslichtdynamik", "natürliche Beleuchtung" oder mit ähnlichen Begriffen bezeichnet werden, welche symbolisieren, dass sich die Beleuchtung im Wesentlichen am natürlichen Tageslichtverlauf orientiert.

Ein Beispiel für einen vorgegebenen Verlauf der Lichtparameter in der Einstellung "HCL Daylight" ist in Figur 10c dargestellt. In den Figuren 3b und 3c sind dies die Verläufe, die nahe beim vorgegebenen Verlauf liegen.

Die Einstellung "CREATIVE" könnte auch als "Kreativitätsbeleuchtung" oder ähnlich bezeichnet werden. In Studien wurde belegt, dass die Kreativität bei warmweißer Beleuchtung höher ist als bei Standardbeleuchtung oder erhöhter Farbtemperatur. Es kann in bestimmten Fällen sinnvoll sein, auch während des Tages, bei dem als "Standard-HCL-Beleuchtung" eine helle, tageslichtähnliche Beleuchtung realisiert wird, von dieser Vorgabe abzuweichen und die "Kreativitätseinstellung" zu wählen, z.B. zur Durchführung von Kreativitätsworkshops, Brainstorming oder anderen Aktivitäten, bei denen weniger die Konzentration und Aufmerksamkeit, als eine inspirierende und Kreativität fördernde Atmosphäre gewünscht ist.

Ein Beispiel für einen vorgegebenen Verlauf der Lichtparameter in der Einstellung "CREATIVE" ist in Figur 10d dargestellt. In den Figuren 3b und 3c sind dies die Verläufe, welche im mittleren Bereich zwischen dem vorgegebenen Verlauf und dem unteren Grenzverlauf liegen.

Die Einstellung "RELAX" könnte auch als "Entspannung" oder ähnlich bezeichnet werden. Warme Farben und eine Helligkeit, die unter das übliche "Arbeitsniveau" reduziert ist, fördern die Entspannung und erlauben eine vertraute Atmosphäre. Anwendungsfälle sind z. B. entspannte Gespräche an Nachmittag oder Abend, aber auch "Weihnachtsstimmung" oder vergleichbares.

Ein Beispiel für einen veränderten Verlauf der Lichtparameter in der Einstellung "RELAX" ist in Figur 10e dargestellt. In den Figuren 3b und 3c sind dies die Verläufe, welche nahe beim unteren Grenzverlauf liegen.

Auch wenn oben fünf diskrete Einstellungen beschrieben wurden, so kann vorgesehen sein, dass die eindimensionale Benutzereingabe auch Werte zwischen diesen diskreten Einstellungen einnehmen kann. Der sich daraus ergebende Verlauf der Lichtparameter kann dann in den Beispielen gemäß Figuren 10a bis 10e im Balkendiagramm angezeigt werden. Die Vielzahl möglicher Benutzereingaben auf der eindimensionalen Skala kann auch in mehr als die genannten fünf Gruppen oder in andere Bezeichnungen gruppiert werden.

So können z.B. für jede der oben genannten 5 Einstellungen 11 oder 7 Unterteilungen definiert sein, so dass sich insgesamt 55 oder 35 diskrete Einstellungen ergeben. Auch jede andere Zahl von Unterteilungen ist denkbar.

Es ist vorteilhaft, so viele Einstellungen zu wählen, dass keine vom Nutzer als störend empfundenen Sprünge in der Intensität oder Farbtemperatur auftreten, wenn der Nutzer von einer in eine andere Einstellung wechselt.

Gleichzeitig ist vorteilhaft, dass nicht so viele Einstellungen definiert werden, dass der Nutzer keine Änderung wahrnimmt, obwohl die Nutzereingabe deutlich verändert wurde. Die oben genannten Zahlen zwischen 35 und 55 Einstellungsmöglichkeiten haben sich dafür als vorteilhaft herausgestellt.

In einem Beispiel ist der Verlauf der Lichtparameter über einen 24-h-Tag durch 20 Zeitpunkte definiert, weiterhin sind die möglichen Nutzereinstellungen durch 35 diskrete Einstellungen für jeden der 20 Zeitpunkte definiert. Daraus ergibt sich eine Matrix von 20 x 35 Punkten für jeden Lichtparameter. Diese Matrix kann errechnet werden und fest in einem Speicher der Steuervorrichtung als Tabelle abgespeichert werden. Im Betrieb kann dann zunächst einmalig am Tag die Zuordnung der 20 Zeitpunkte zur realen Ortszeit zu erfolgen und im zeitlichen Verlauf die Interpolation zwischen den zwei der aktuellen Ortszeit nächstliegenden Zeitpunkte für die jeweilige Nutzereinstellung. Dies kann bei weniger leistungsfähigen Mikrocontrollern in der Steuereinheit den Zeitaufwand für Berechnungen der Lichtparameter deutlich reduzieren. In Fig. 3d ist ein Beispiel für 21 Nutzereinstellungen und 20 Zeitpunkte skizziert.

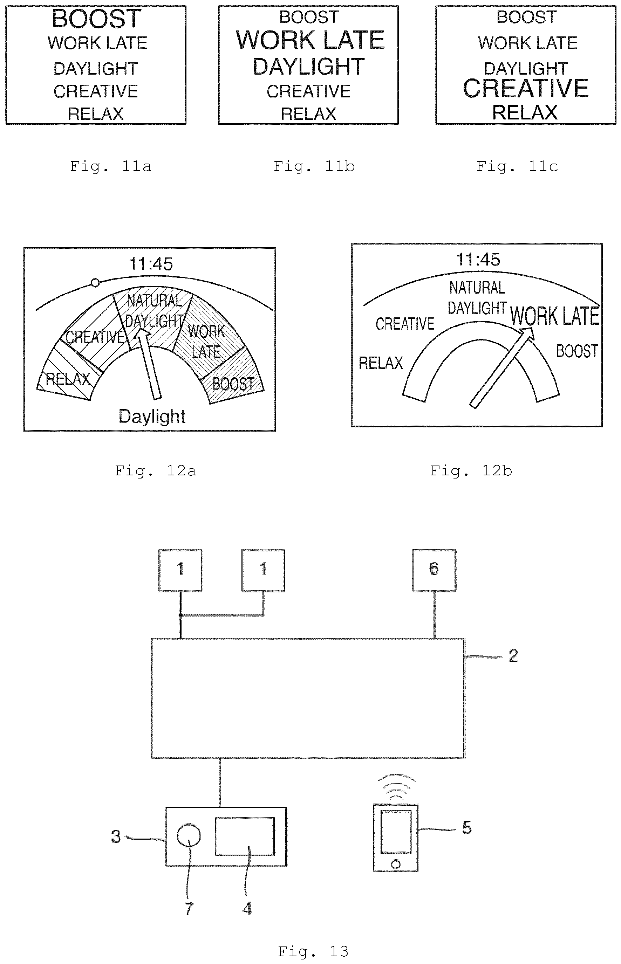

In einer weiteren Ausführungsform kann die Visualisierung der eindimensionalen Benutzereingabe in Worten erfolgen, wobei die Größe der Worte den eingestellten Wert symbolisiert. Dies ist beispielhaft in den Figuren 11a bis 11c gezeigt.

Die der gewählten Einstellung entsprechende Kategorie kann in einer größeren Schriftgröße dargestellt werden als benachbarte Einstellungen und weiter entfernte Einstellungen.

Die Schriftgrößen lassen sich fein abgestuft in vielen Schritten, quasianalog zur vom Nutzer gewählten Einstellung anpassen. Die Figuren 11a bis 11c zeigen beispielhaft drei Visualisierungen aus einer möglichen großen Zahl von Bildern zur Rückmeldung der Einstellung an den Nutzer. Dabei entspricht die Darstellung gemäß Figur 11a einer Einstellung "Boost". Die Darstellung gemäß Figur 11b entspricht einer Einstellung zwischen "Daylight" und "Work Late". Die Darstellung gemäß Figur 11c entspricht der Einstellung "Creative" mit leichter Tendenz zu "Relax".

Eine weitere Art der Darstellung ist schematisch in den Figuren 12a und 12b gezeigt. Hier wird der aktuelle Wert der eindimensionalen Benutzereingabe auf einer gebogenen Skala mittels eines Pfeils dargestellt. Die Charakterisierung des eingestellten Werts kann ähnlich wie oben beschrieben zusätzlich zu den dargestellten Begriffen durch Farben und/oder Schriftgrößen angezeigt werden.

In Figur 13 ist schematisch eine Ausführungsform eines erfindungsgemäßen Beleuchtungssystems dargestellt. Das Beleuchtungssystem weist ein oder mehrere Leuchtmittel 1 (hier sind zwei Leuchtmittel 1 gezeigt) und eine Steuervorrichtung 2 zum Anpassen von Lichtparametern der Leuchtmittel 1 im Betrieb auf. Die Leuchtmittel 1 sind über Kabel mit der Steuervorrichtung 2 verbunden. Es kann aber auch eine drahtlose Verbindung vorgesehen sein.

Das Beleuchtungssystem weist ferner ein Eingabemittel 3 auf, in das eine Anzeigeeinrichtung 4 und ein Drehregler 7 integriert sind. Über den Drehregler 7 des Eingabemittels 3 kann eine eindimensionale Benutzereingabe gewählt und an die Steuervorrichtung 2 übermittelt werden. Das Eingabemittel 3 ist über Kabel mit der Steuervorrichtung 2 verbunden. Es kann aber auch eine drahtlose Verbindung vorgesehen sein.

Eine Einstellung der eindimensionalen Benutzervorgabe kann in manchen Ausführungsformen auch oder ausschließlich über ein auf einem mobilen Gerät 5 (z.B. Smartphone oder Tablet) laufendes Programm erfolgen. Das mobile Gerät 5 kann mit der Steuervorrichtung über drahtlose Funkprotokolle kommunizieren.

Das Beleuchtungssystem weist ferner einen oder mehrere Sensoren 6 auf, die beispielsweise die Helligkeit oder die Anwesenheit von Personen detektieren und an die Steuervorrichtung übermitteln. Die Sensoren 6 sind über Kabel mit der Steuervorrichtung 2 verbunden. Es kann aber auch eine drahtlose Verbindung vorgesehen sein.

Obwohl die Erfindung im Detail durch die gezeigten Ausführungsbeispiele näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

Bezugszeichenliste

1  Leuchtmittel
2  Steuervorrichtung
3  Eingabemittel
4  Anzeigeeinrichtung
5  Mobiles Gerät
6  Sensoren
7  Drehregler

**Patentansprüche**

1. Beleuchtungssystem aufweisend ein oder mehrere Leuchtmittel (1) und eine Steuervorrichtung (2) zum Anpassen von Lichtparametern der Leuchtmittel (1) im Betrieb, wobei die Steuervorrichtung (2) eingerichtet ist, die Lichtparameter zeitabhängig gemäß mehrerer vorgegebener Verläufe der Lichtparameter anzupassen, **dadurch gekennzeichnet, dass** die Steuervorrichtung (2) weiter eingerichtet ist, eine eindimensionale Benutzereingabe entgegenzunehmen und von einem aktuellen Verlauf aus den mehreren Verläufen entsprechend der eindimensionalen Benutzereingabe zu einem anderen Verlauf der mehreren vorgegebenen Verläufe zu wechseln, wobei die Steuervorrichtung (2) ferner eingerichtet ist, den aktuellen Verlauf der Lichtparameter entsprechend weiterer Eingabewerte zu verändern, und wobei die Steuervorrichtung (2) ferner eingerichtet ist, die weiteren Eingabewerte zu ermitteln und/oder von externen Sensoren (6) entgegenzunehmen, wobei die weiteren Eingabewerte zunächst zusammen mit einer von einem Benutzer über ein Eingabemittel eingegebenen Stellgröße in eine einzelne Größe verrechnet werden, welche dann als die eindimensionale Benutzereingabe für das Beleuchtungssystem dient.

2. Beleuchtungssystem nach Anspruch 1, wobei die Lichtparameter Intensität, Farbtemperatur, Ausstrahlrichtung und/oder Ausstrahlwinkel des von den Leuchtmitteln (1) im Betrieb emittierten Lichts sind.

3. Beleuchtungssystem nach einem der vorangegangenen Ansprüche, ferner aufweisend ein mit der Steuervorrichtung (2) verbundenes Eingabemittel (3) zur Eingabe der eindimensionalen Benutzereingabe.

4. Beleuchtungssystem nach Anspruch 3, wobei das Eingabemittel (3) ein unmittelbares Eingabemittel, insbesondere ein Schalter, Taster, Dreh- oder Schieberegler, oder eine auf einem Computer (5) laufende Anwendung ist.

5. Beleuchtungssystem nach einem der vorangegangenen Ansprüche, wobei die Steuervorrichtung (2) ferner eingerichtet ist, die mehreren Verläufe der Lichtparameter nichtlinear mit der eindimensionalen Benutzereingabe zu verändern.

6. Beleuchtungssystem nach Anspruch 5, wobei die Steuervorrichtung (2) ferner eingerichtet ist, bei der Veränderung der mehreren Verläufe der Lichtparameter Maximal- und/oder Minimalwerte für die Lichtparameter zu berücksichtigen.

7. Beleuchtungssystem nach Anspruch 6, wobei die Maximal- und/oder Minimalwerte von zeitlichen Parametern und/oder von anderen als zeitlichen Parametern abhängen.

8. Beleuchtungssystem nach Anspruch 5, wobei die Steuervorrichtung (2) ferner eingerichtet ist, die veränderten Verläufe der Lichtparameter nach einer vorgegebenen ersten Zeitspanne auf die vorgegebenen mehreren Verläufe der Lichtparameter zurückzusetzen.

9. Beleuchtungssystem nach Anspruch 5, wobei die Steuervorrichtung (2) ferner eingerichtet ist, die veränderten Verläufe der Lichtparameter auch nach dem Aus- und Wiedereinschalten des/der Leuchtmittel beizubehalten, wenn zwischen dem Aus- und Wiedereinschalten höchstens eine vorbestimmte dritte Zeitspanne liegt.

10. Beleuchtungssystem nach einem der Ansprüche 3 bis 9, wobei das Eingabemittel (3) eine Anzeigeeinrichtung (4) aufweist, wobei das Eingabemittel (2) eingerichtet ist, auf der Anzeigeeinrichtung (4) ein Maß für die Veränderung des aktuellen Verlaufs der Lichtparameter anzuzeigen.

**Claims**

1. Lighting system having one or more light source (1) and a control device (2) for adjusting lighting parameters of the light sources (1) during operation, the control device (2) being set up to adjust the lighting parameters as a function of time in accordance with a plurality of predetermined courses of the lighting parameters, **characterised in that** the control device (2) is further set up to receive a one-dimensional user input and to switch from a current course from the plurality of courses corresponding to the one-dimensional user input to another course of the plurality of predetermined courses, wherein the control device (2) is further set up to change the current course of the light parameters in accordance with further input values, and wherein the control device (2) is further set up to determine the further input values and/or to receive them from external sensors (6), wherein the further input values are initially calculated together with a manipulated variable entered by a user via an input means into a single variable, which then serves as a one-dimensional user input for the lighting system.

2. The lighting system according to claim 1, wherein the light parameters are intensity, colour temperature, beam direction and/or beam angle of the light emitted by the light sources (1) during operation.

3. The lighting system according to any one of the preceding claims, further comprising input means (3) connected to the control device (2) for inputting the one-dimensional user input.

4. The lighting system according to claim 3, wherein the input means (3) is a direct input means, in particular a switch, button, rotary or slide control, or an application running on a computer (5).

5. The lighting system according to one of the preceding claims, wherein the control device (2) is further arranged to change the multiple courses of the light parameters non-linearly with the one-dimensional user input.

6. The lighting system according to claim 5, wherein the control device (2) is furthermore set up to take maximum and/or minimum values for the light parameters into account when changing the multiple courses of the light parameters.

7. The lighting system according to claim 6, wherein the maximum and/or minimum values depend on temporal parameters and/or on parameters other than temporal parameters.

8. The lighting system according to claim 5, wherein the control device (2) is furthermore set up to reset the changed courses of the light parameters to the predetermined multiple courses of the light parameters after a predetermined first period of time.

**9.** The lighting system according to claim 5, wherein the control device (2) is furthermore set up to maintain the changed courses of the light parameters even after the light source(s) has/have been switched off and on again, if there is at most a predetermined third time interval between switching off and switching on again.

**10.** The lighting system according to one of claims 3 to 9, wherein the input means (3) has a display device (4), wherein the input means (2) is set up to display on the display device (4) a measure of the change in the current course of the light parameters.

## Revendications

**1.** Système d'éclairage présentant un ou plusieurs moyens d'éclairage (1) et un dispositif de commande (2) pour adapter des paramètres d'éclairage des moyens d'éclairage (1) en fonctionnement, le dispositif de commande (2) étant conçu pour adapter les paramètres d'éclairage en fonction du temps selon plusieurs courbes prédéfinies des paramètres d'éclairage, **caractérisé en ce que** le dispositif de commande (2) est en outre conçu pour recevoir une entrée unidimensionnelle de l'utilisateur et pour passer d'une courbe actuelle parmi les plusieurs courbes correspondant à l'entrée unidimensionnelle de l'utilisateur à une autre courbe parmi les plusieurs courbes prédéfinies, le dispositif de commande (2) étant en outre agencé pour modifier l'allure actuelle des paramètres d'éclairage en fonction d'autres valeurs d'entrée, et le dispositif de commande (2) étant en outre agencé pour déterminer et/ou recevoir les autres valeurs d'entrée de capteurs externes (6), les autres valeurs d'entrée étant tout d'abord calculées, conjointement avec une grandeur de réglage introduite par un utilisateur par l'intermédiaire d'un moyen d'entrée, en une seule grandeur qui sert alors d'entrée d'utilisateur unidimensionnelle pour le système d'éclairage.

**2.** Système d'éclairage selon la revendication 1, dans lequel les paramètres de lumière sont l'intensité, la température de couleur, la direction d'émission et/ou l'angle d'émission de la lumière émise par les moyens d'éclairage (1) en fonctionnement.

**3.** Système d'éclairage selon l'une quelconque des revendications précédentes, comprenant en outre un moyen d'entrée (3) connecté au dispositif de commande (2) pour entrer l'entrée unidimensionnelle de l'utilisateur.

**4.** Système d'éclairage selon la revendication 3, dans lequel le moyen d'entrée (3) est un moyen d'entrée direct, en particulier un commutateur, un bouton-poussoir, un bouton rotatif ou un curseur, ou une application fonctionnant sur un ordinateur (5).

**5.** Système d'éclairage selon l'une quelconque des revendications précédentes, dans lequel le dispositif de commande (2) est en outre adapté pour modifier de manière non linéaire la pluralité d'courbes des paramètres d'éclairage avec l'entrée unidimensionnelle de l'utilisateur.

**6.** Système d'éclairage selon la revendication 5, dans lequel le dispositif de commande (2) est en outre agencé pour prendre en compte des valeurs maximales et/ou minimales pour les paramètres d'éclairage lors de la modification de la pluralité de courbes des paramètres d'éclairage.

**7.** Système d'éclairage selon la revendication 6, dans lequel les valeurs maximales et/ou minimales dépendent de paramètres temporels et/ou de paramètres autres que des paramètres temporels.

**8.** Système d'éclairage selon la revendication 5, dans lequel le dispositif de commande (2) est en outre agencé pour réinitialiser les courbes modifiées des paramètres d'éclairage après une première période de temps prédéterminée à la pluralité prédéterminée de courbes des paramètres d'éclairage.

**9.** Système d'éclairage selon la revendication 5, dans lequel le dispositif de commande (2) est en outre agencé pour conserver les courbes modifiées des paramètres d'éclairage même après l'extinction et le rallumage du ou des moyens d'éclairage, si au maximum un troisième intervalle de temps prédéterminé s'écoule entre l'extinction et le rallumage.

**10.** Système d'éclairage selon l'une des revendications 3 à 9, dans lequel le moyen d'entrée (3) comporte un dispositif d'affichage (4), le moyen d'entrée (2) étant agencé pour afficher sur le dispositif d'affichage (4) une mesure de la variation de l'courbe courante des paramètres lumineux.

Fig. 1

Fig. 2

Fig. 3a

Fig. 3b

Fig. 3c

Fig. 3d

Fig. 4

Fig. 5

Fig. 6

Fig. 7

Fig. 8a

Performance
Boost
Work Late

HCL
Daylight

CREATIVE

RELAX

Fig. 8b

Fig. 8c

Fig. 8d

Fig. 8e

**Melanopisch tageslichtäquivaltente (D65) Beleuchtungsstärke (MDEI)**

Fig. 9

6:06

Performance Boost

Fig. 10a

6:06

Work late

Fig. 10b

6:06

HCL-Daylight

Fig. 10c

6:06

Creative

Fig. 10d

6:06

Relax

Fig. 10e

| BOOST<br>WORK LATE<br>DAYLIGHT<br>CREATIVE<br>RELAX | BOOST<br>**WORK LATE**<br>**DAYLIGHT**<br>CREATIVE<br>RELAX | BOOST<br>WORK LATE<br>DAYLIGHT<br>**CREATIVE**<br>RELAX |

Fig. 11a             Fig. 11b             Fig. 11c

Fig. 12a             Fig. 12b

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9655215 B1
- WO 2016058849 A1
- WO 2016199101 A2